# EUROPEAN PATENT APPLICATION

(11) **EP 4 623 703 A1**
(43) Date of publication of application: **01.10.2025**
(21) Application number: 24382333.3
(22) Date of filing: 27.03.2024
(51) Int. Cl.: A23L 33/105, A23P 10/30

(54) **COMPLEX COACERVATES FOR NUTRACEUTICALS**

(71) Applicant: Nektium Pharma S.L., 35118 Aguimes Las Palmas (ES)
(72) Inventor: VEGA MORALES, Tanausú, E-35118 Agüimes, Las Palmas (ES); JIMÉNEZ DEL RÍO, Miguel, E-35118 Agüimes, Las Palmas (ES); LÓPEZ RÍOS, Laura, E-35118 Agüimes, Las Palmas (ES); PÉREZ MACHÍN, Rubén, E-35118 Agüimes, Las Palmas (ES); GARCÍA GUERRA, Romualdo Bentor, E-35118 Agüimes, Las Palmas (ES); RAMOS CARREÑO, Teresa, E-35118 Agüimes, Las Palmas (ES); MATEOS DÍAZ, Carlos Javier, E-35118 Agüimes, Las Palmas (ES)
(74) Representative: ABG Intellectual Property Law, S.L.

(57) **Abstract**

The present invention refers to nutraceutical compositions, to plant extracts and complex coacervates comprising them. The present invention further refers to uses thereof.

## Description

### FIELD OF THE INVENTION

The present invention pertains to the field of complex coacervates and extracts of *Aframomum melegueta,* particularly within the domain of nutraceutical applications. Complex coacervates are colloidal systems formed through the interaction of oppositely charged polyelectrolytes and represent a promising avenue for the encapsulation and delivery of extracts comprising bioactive ingredients such as *Aframomum melegueta,* aimed at enhancing nutritional benefits.

### BACKGROUND

Coacervation is a phenomenon of liquid/liquid spontaneous phase separation leading to colloid-rich and colloid-poor phases. The viscous colloid-rich phase is the coacervate which generally stays at the bottom. The formation of coacervates is the outcome of a complex balance of electrostatics, hydrophobicity, excluded volume, van der Waals, and other contributions to overall system stability. In the case of complex coacervation, two oppositely charged polyelectrolytes, such as DNA, proteins or polysaccharides, interact with each other forming a dense network. Two polyelectrolytes of different charges are present and the electrostatic polyelectrolyte-polyelectrolyte interaction leads to an almost neutral charge, i.e., zero, which leads to coacervates spontaneously forming in a sponge-like structure.

Coacervation-based microencapsulation provides food systems with a variety of benefits, including the preservation of delicate agents in harsh environments, the extending of shelf life, the masking of disagreeable odors or tastes, the ease of handling and transportation, and other advantages. Because of their nontoxicity, biocompatibility, and biodegradability, oppositely charged polysaccharides are advantageously used as coacervate materials, which may even be dried into powders.

Traditional formulations of complex coacervates predominantly rely on a single polysaccharide and protein combination. This approach, while effective to some extent, presents limitations in terms of stability, allergenic potential, and compatibility with dietary preferences. Moreover, conventional coacervate formulations often utilize gelatin as the primary protein component, thereby restricting their applicability to certain consumer segments.

In traditional coacervation processes, gelatin has been the hydrocolloid of choice due to several inherent advantages derived from its molecular structure. Gelatin offers ease of use, as its rheological behavior and molecular configuration can be precisely controlled by adjusting concentration and temperature parameters. This control enables the formation of liquid-like coacervates that can efficiently encapsulate target materials and quickly gel to form protective shells upon temperature reduction. Moreover, gelatin's reversible gelation process allows for seamless encapsulation cycles, enhancing process efficiency. Its ideal electrostatic and amphiphilic properties facilitate interaction with non-gelatin polymers, preventing the formation of undesirable precipitates or aggregates. Additionally, gelatin exhibits reduced aggregation tendencies post-wall formation, further enhancing its suitability for coacervation applications.

Despite advancements in complex coacervate technology, there exists a need for innovative formulations that address the shortcomings of traditional approaches. The demand for nutraceutical products continues to grow, necessitating solutions that offer improved stability, efficacy, and consumer acceptability. Moreover, there is a growing preference for plant-based ingredients in consumer products for sustainability reasons, stemming from the lower environmental impact associated with plant protein production. While replacing gelatin with plant-based alternatives seems desirable, replicating all the advantageous properties of gelatin poses significant challenges. Most plant proteins lack the required electrostatic, amphiphilic, and gelation properties essential for effective coacervation. Unlike gelatin, plant-based proteins typically form irreversible particle gels upon heating, complicating their application in coacervation processes.

One prominent plant extract comprising bioactive ingredients gaining attention in the nutraceutical industry is *Aframomum melegueta,* derived from the seeds of the plant commonly known as "Grains of Paradise" or "alligator pepper". *Aframomum melegueta* belongs to the Zingiberaceae family and has a rich history of traditional use in various cultures, particularly in West Africa, where it has been utilized for its purported health benefits and culinary applications. Traditionally, *Aframomum melegueta* has been prized for its characteristic pungent flavor and aroma, which stem from its diverse array of bioactive compounds, including vanilloid compounds such as isomers of gingerol, paradol, and shogaol. In addition to its culinary uses, *Aframomum melegueta* has been employed in traditional medicine to alleviate digestive discomfort, improve circulation, and enhance vitality.

Despite its esteemed traditional uses, *Aframomum melegueta* poses certain challenges when incorporated into nutraceutical formulations. One significant issue is its susceptibility to oxidation, which can compromise the stability and efficacy of the bioactive compounds present in the plant extract. Oxidative degradation can lead to a loss of potency and undesirable changes in flavor and aroma, ultimately impacting the overall quality of the nutraceutical product. Additionally, the volatile nature of some of the bioactive compounds in *Aframomum melegueta* further exacerbates stability concerns, necessitating innovative approaches to ensure optimal preservation and delivery of its beneficial properties in nutraceutical formulations.

### SUMMARY OF THE INVENTION

In a first aspect, the invention is directed to a complex coacervate-based microcapsule comprising:
a. a plant extract comprising a bioactive ingredient, mixed with a first polysaccharide; and
b. a plant protein mixed with a second polysaccharide selected from a pectin;
wherein said pectin and protein at least partially cover the first polysaccharide, and wherein the microcapsule has a size comprised between 1 and 200 µm.

In a second aspect, the invention is directed at a method for the preparation of the complex coacervate of the previous aspect, comprising the steps of:
a. Providing a mixture of a plant extract comprising a bioactive ingredient and a first polysaccharide in a hydroalcoholic solvent;
b. Submitting the mixture to an evaporation step to at least partially evaporate the alcoholic solvent;
c. Adding a plant protein and a second polysaccharide selected from a pectin having a methylation degree not greater than 50% to the mixture of step (b);
d. Adjusting the pH of the mixture of step (c) to a range of 3.5-4.5; and
e. Drying the mixture of step (d).

In a third aspect, the invention is also directed at a complex coacervate obtained according to the method of the second aspect.

In a fourth aspect, the invention is directed at an extract of *Aframomum melegueta,* comprising:
- From 4 to 20 wt% of 6-shogaol;
- from 20 to 55 wt% of 6-paradol; and
- from 25 to 70 wt% of 6-gingerol;
the wt% being expressed as dry weight, with respect to the sum of the dry weights of 6-shogaol, 6-paradol and 6-gingerol.

A fifth aspect is directed at a method for obtaining an extract of *Aframomum melegueta,* comprising the steps of:
a. Providing seeds of *Aframomum melegueta;*
b. Subjecting the seeds to
   - a hydroalcoholic solvent comprising from 20% to 90% ethanol, or
   - CO₂ supercritical fluid extraction, or
   - CO₂ supercritical fluid extraction with 5% to 40% ethanol;
c. Raising the temperature to between 30 °C and 90 °C; and
d. Separating the liquid, or supercritical fluid, fraction from the solid residue, said fraction containing the extract.

This aspect leads to the production of the extract of *Aframomum melegueta* of the invention. In this way, a sixth aspect of the invention is directed at an extract of *Aframomum melegueta* obtainable according to the method of the previous paragraph.

The authors have also surprisingly found that *Aframomum melegueta* modulates the endocannabinoid system.

Thus, a seventh aspect of the invention is direct at the non-therapeutic use of the extract of *Aframomum melegueta* according to the invention, for preventing and/or reducing stress, anxiety, mood disturbances, and/or sleep disorders.

In a further aspect, the invention is directed at the non-therapeutic use of the complex coacervate of the invention comprising an extract of *Aframomum melegueta,* for preventing and/or reducing stress, anxiety, mood disturbances, and/or sleep disorders.

A final aspect of the invention is directed at a nutraceutical composition comprising an extract of *Aframomum melegueta,* or comprising a complex coacervate comprising an extract of *Aframomum melegueta,* as described herein.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.

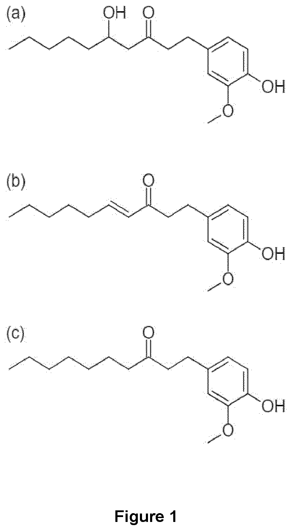

**Figure 1****.** Chemical structures of: (a) 6-gingerol; (b) 6-shogaol; and (c) 6-paradol.

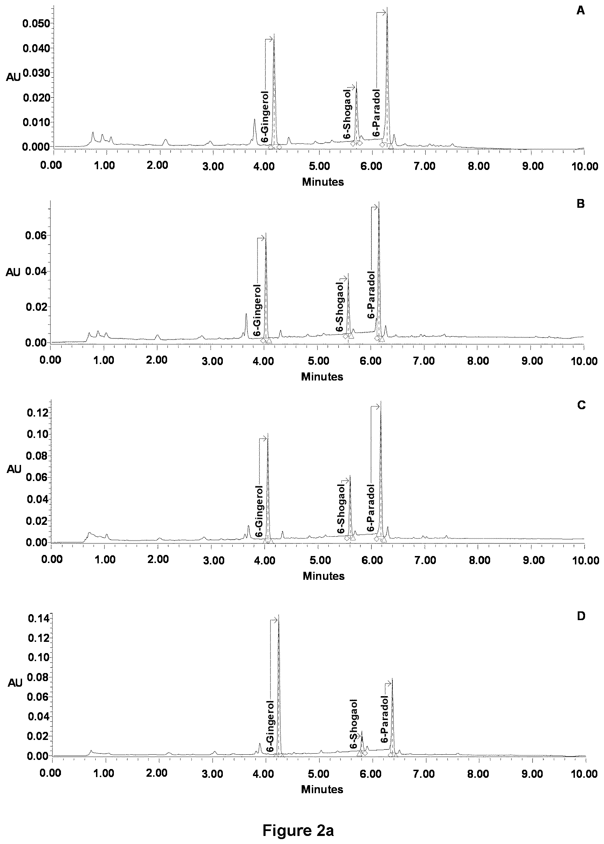

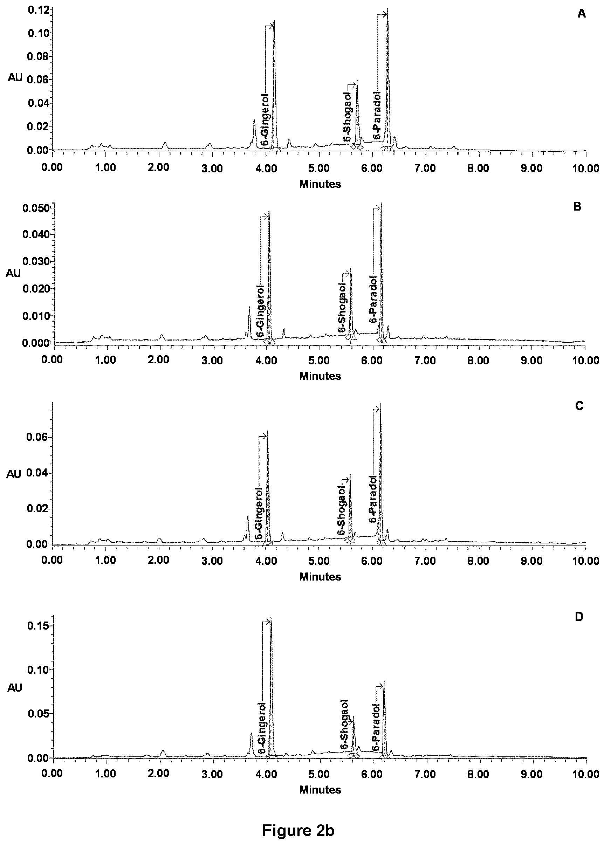

Figure 2a. UHPLC-DAD stacked chromatograms at 280 nm of the seeds of *Aframomum melegueta.* The 6-gingerol, 6-shogaol and 6-paradol peaks are identified at 4.1 min, 5.7 min and 6.3 min, respectively. The samples were analyzed according to the analytical method described in Example 3. In the figure, chromatogram A revealed total vanilloids: 47.02% (w/w), and the relative wt% amounts of 6-gingerol, 6-shogaol and 6-paradol at 38%, 14.7% and 47.3%, respectively. Chromatogram B revealed total vanilloids: 38.24% (w/w), and the relative wt% amounts of 6-gingerol, 6-shogaol and 6-paradol at 36.7%, 17.5% and 45.8%, respectively. Chromatogram C revealed total vanilloids: 43.46% (w/w), and the relative wt% amounts of 6-gingerol, 6-shogaol and 6-paradol at 35.7%, 17.3% and 47.0%, respectively. Chromatogram D revealed total vanilloids: 46.03% (w/w), and the relative wt% amounts of 6-gingerol, 6-shogaol and 6-paradol at 63.5%, 5.5% and 31.0%, respectively.
Figure 2b. UHPLC-DAD stacked chromatograms at 280 nm of the microencapsulated extract obtained from the seeds of *Aframomum melegueta.* The 6-gingerol, 6-shogaol and 6-paradol peaks are identified at 4.1 min, 5.7 min and 6.3 min, respectively. The samples were analyzed according to the analytical method described in Example 3. In the figure, chromatogram A revealed the relative wt% amounts of 6-gingerol, 6-shogaol and 6-paradol at 39.1%, 17.2% and 43.7%, respectively. Chromatogram B revealed the relative wt% amounts of 6-gingerol, 6-shogaol and 6-paradol at 40.7%, 17.5% and 41.8%, respectively. Chromatogram C revealed the relative wt% amounts of 6-gingerol, 6-shogaol and 6-paradol at 37.2%, 17.9% and 44.9%, respectively. Chromatogram D revealed the relative wt% amounts of 6-gingerol, 6-shogaol and 6-paradol at 59.6%, 12.9% and 27.5%, respectively.

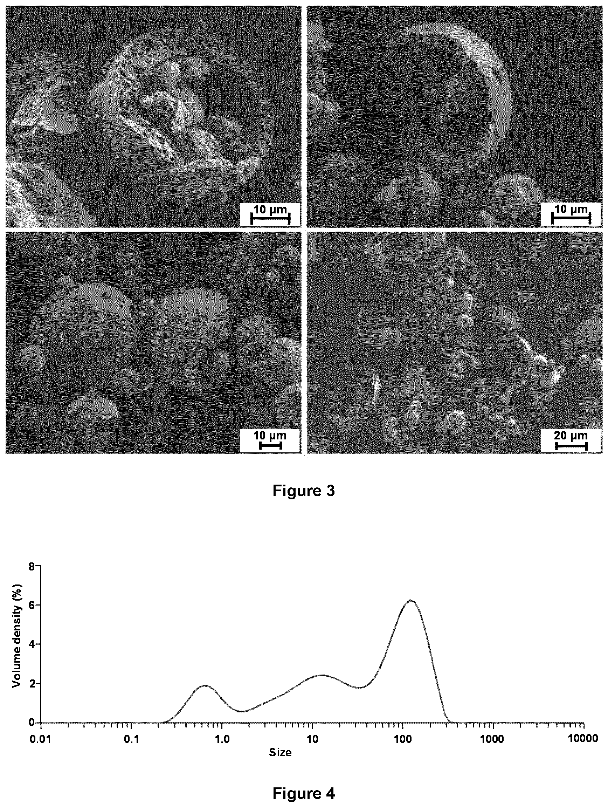

**Figure 3****.** Field Emission Scanning Electron Microscopy (FESEM) of the *Aframomum melegueta* extract encapsulated by complex coacervation in a matrix of gum arabic, low methoxyl pectin (esterification grade between 27%-32%) and pea protein (protein purity ≥ 80%) and powdered by spray-drying. The samples were analyzed according to the analytical method described in Example 3.
**Figure 4****.** Results of a particle size distribution analysis obtained by laser diffraction, of a microencapsulated hydroalcoholic extract of *Aframomum melegueta* prepared according to Example 2a. Values of Dv (10), Dv (50) and Dv (90) were 0.889 µm, 45.4 µm and 168.0 µm, respectively. D [3,2] and D [4,3] were 3.72 µm and 67.1 µm, respectively.

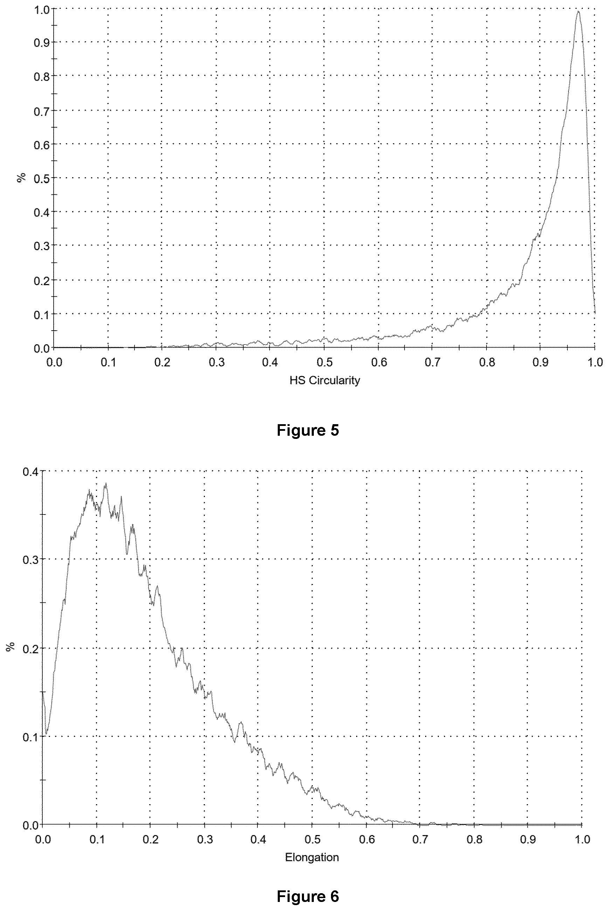

**Figure 5****.** Circularity of the particles measured by Morphologically Directed Raman Spectroscopy or MDRS, in a sample of a microencapsulated hydroalcoholic extract of *Aframomum melegueta* obtained according to Example 2a. HScirc. D[n,0.1], HScirc. D[n,0.5] and HScirc. D[n,0.9] yielded results of 0.69, 0.93 and 0.98, respectively.
**Figure 6****.** Elongation of the particles measured by Morphologically Directed Raman Spectroscopy (MDRS), in a sample of a microencapsulated hydroalcoholic extract of *Aframomum melegueta* obtained according to Example 2a. Elong. D[n,0.1], Elong. D[n,0.5] and Elong. D[n,0.9] yielded results of 0.05, 0.16 and 0.38, respectively.

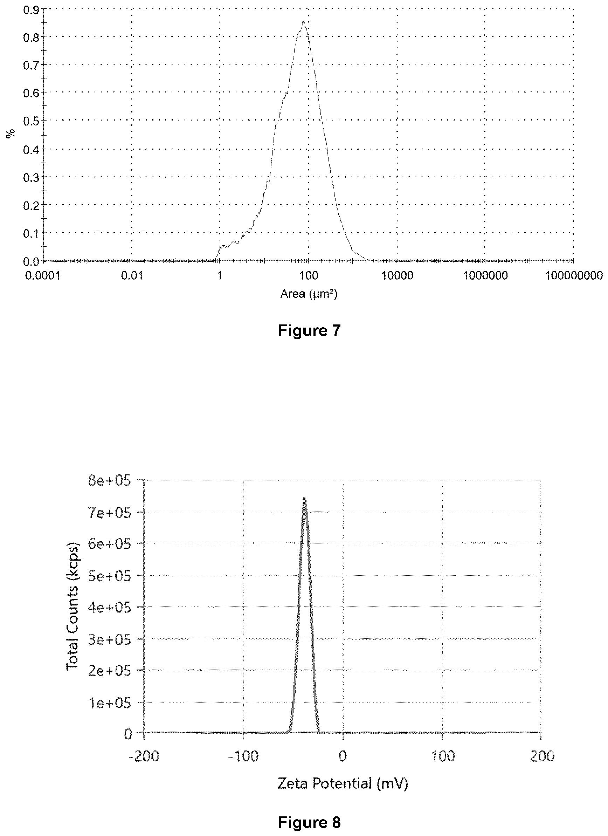

**Figure 7****.** Area of the particles measured by Morphologically Directed Raman Spectroscopy (MDRS), in a sample of a microencapsulated hydroalcoholic extract of *Aframomum melegueta* obtained according to Example 2a. Area. D[n,0.1], Area. D[n,0.5] and Area. D[n,0.9] yielded results of 9.98 µm², 60.61 µm² and 261.38 µm², respectively.
**Figure 8****.** Zeta potential distribution measured by electrophoretic light scattering of microencapsulated particles from example 2a. Values obtained for Z potential (mV), conductivity (mS/cm), Wall Zeta Potential (mV), Z Deviation and Quality factor were as follow: -37.85, 0.02472, -49.69, 5.071 and 7.251, respectively.

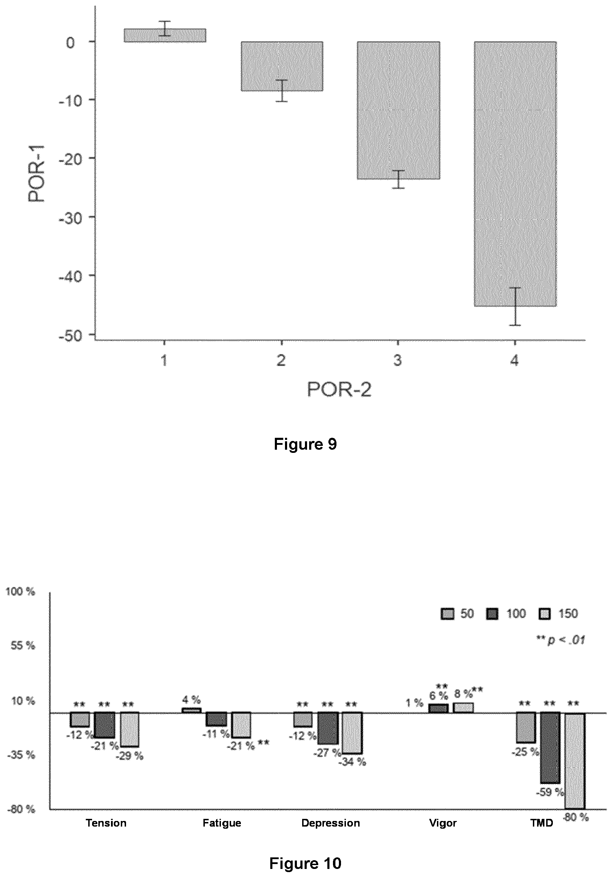

**Figure 9****.** Percentage reduction on the HAM-A scale for different doses (POR-1: Percentage of reduction. POR-2: treatment: 1 = 0 mg, 2 = 50 mg, 3 = 100 mg, 4 = 150 mg.)
**Figure 10****.** Percentage change in improvement, showing the percentage change at each dosage with respect to placebo, for the variables stress, fatigue, depression, vigor and TMD.

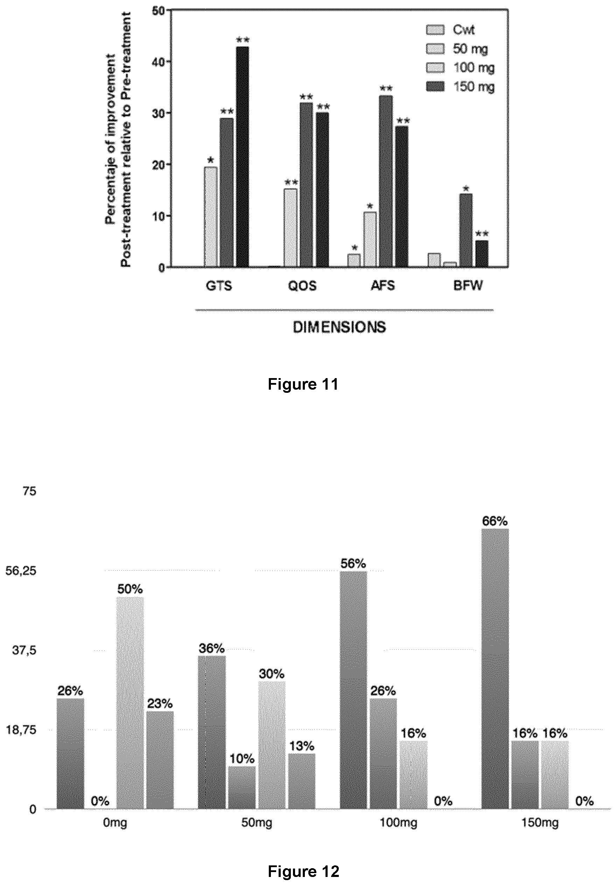

**Figure 11****.** Percentage change in improvement, showing the percentage change at each dose before and after treatment.
**Figure 12****.** Percentage of participants' feeling after taking the extract. At each dosage (0, 50, 100 and 150 mg), the bars represent, from left to right: feeling of less anxiety; slight improvement; do not feel improvements; do not know.

### DETAILED DESCRIPTION OF THE INVENTION

### Complex coacervates of the invention

Building on the prior art, the present disclosure introduces novel complex coacervate formulations optimized for nutraceutical applications addressing the challenges associated with handling, stability and incorporation of plant extracts comprising bioactive ingredients such as *Aframomum melegueta.* Unlike conventional approaches, which typically utilize a single polysaccharide and protein combination, the complex coacervate of the invention requires the presence of two polysaccharides and one protein, thereby enhancing the versatility and functionality of the coacervate system. Additionally, the invention aims to address the limitations of gelatin-based coacervates by providing formulations that are compatible with a broader range of dietary preferences and offer superior stability and efficacy.

Therefore, in a first aspect the invention is directed to a complex coacervate-based microcapsule comprising:
a. a plant extract comprising a bioactive ingredient, mixed with a first polysaccharide; and
b. a plant protein mixed with a second polysaccharide selected from a pectin;
wherein said pectin and protein at least partially cover the first polysaccharide, and wherein the microcapsule has a size comprised between 1 and 200 µm.

As used herein, the term "coacervate" is used in the sense understood by a person skilled in the art, and denotes aggregations of molecules held together via non-covalent interactions such as electrostatic, van der Waals and hydrophobic attractive forces, etc. In the present invention, the coacervates of the invention are "complex coacervates", i.e., result from the interaction of two oppositely charged polyelectrolytes. Without wishing to be bound by a particular theory, the inventors believe that the coacervates of the invention, when used with a plant extract, form a sponge-like structure with said extract being confined randomly within its structure, i.e., the plant extract comprising a bioactive ingredient is not in a core *per se,* but rather throughout the network of the polyelectrolytes.

In the present invention, the plant extract comprising a bioactive ingredient is held to a first polysaccharide, and the resulting network is intertwined to a protein and to a second polysaccharide. In the present invention, the term microcapsule refers to a structure which has substantially spherical shape, and a diameter within 1 and 200 µm, preferably within 10 and 200 µm, more preferably within 40 and 180 µm, even more preferably within 40 and 80 µm. In a preferred embodiment, the averaged diameter of the microcapsules is comprised between 65 µm and 70 µm. In the context of the present invention, the microparticle diameters are determined by laser diffraction. The microcapsule of the invention is not a core-shell structure having clearly distinct layers, but rather a sponge-like structure, which may have an empty core.

In a particular embodiment, the complex coacervate of the invention is such that the first polysaccharide, the plant protein and the second polysaccharide form a matrix structure.

The inventors have surprisingly found out that the combination of ingredients of the complex coacervates of the present invention enhance the encapsulation efficiency of plant extracts comprising bioactive compounds, resulting in increased amounts of encapsulated nutrients per unit volume which ensures that a higher concentration of bioactive compounds can be delivered per dose, maximizing the nutritional benefits for consumers.

The invention enhances the stability of plant extracts comprising bioactive ingredients, ensuring the prolonged shelf-life of nutraceutical compositions. By protecting bioactive ingredients from oxidation and degradation, the invention maintains the potency and efficacy of encapsulated nutrients over extended periods.

In the complex coacervate of the present invention, a plant extract comprising a bioactive ingredient is mixed with a first polysaccharide.

In a particular embodiment, the first polysaccharide is not pectin. In another particular embodiment, the first polysaccharide is not selected from the group consisting of pectin, carbopol, xanthan gum, sodium carboxymethyl, carboxymethyl cellulose, gellan gum, guar gum, chitosan, alginate, carrageenan and dextrans. In a preferred embodiment, the complex coacervate of the invention does not comprise polysaccharides selected from the group consisting of carbopol, xanthan gum, sodium carboxymethyl, carboxymethyl cellulose, gellan gum, guar gum, chitosan, alginate, carrageenan and dextrans.

In a particular embodiment, the first polysaccharide is gum arabic.

In another particular embodiment, the bioactive ingredient is selected from the group consisting of nutraceutical ingredients. In a particular embodiment, the bioactive ingredient is not selected from the group consisting of probiotic bacteria, fragrances and tobacco.

In a particular embodiment, the bioactive ingredient is selected from the group consisting of:
- Phytocannabinomimetic plant species, in particular *Aframomum melegueta, Zingiber officinale, Piper nigrum, Piper guineense, Piper methysticum, Cannabis sativa* (hemp), *Echinacea angustifolia, Echinacea purpurea, Eurotium repens, Magnolia officinalis, Rhododendron dauricum, Rhododendron anthopogonoides, Radula perrottetii, Piper guineense, Piper methysticum, Sanguinaria canadensis, Ziziphus jujube, Euphorbia spp, Brassica spp, Glycyrrhiza spp, Helichrysum spp, Radula spp, Amorpha fruticosa*, *Eurotium repens,* Chelidonium majus, *Zanthoxylum spp, Sanguinaria canadensis, Argemone mexicana*,, *Chelidonium majus, Macleaya cordata, Voacanga africana, Bursera and Protium spp, Mexican copal, Cassia obtusifolia, Commiphora holtziana, Amphipterygium adstringens, Eucalyptus globulus, Ficus carica, Ficus cordata, Nelumbo nucifera, Byrsonima crassa, Byrsonima crassifolia, Byrsonima fagifolia, Pouteria gardnerii, Betula platyphylla, Syzygium jambos, Ziziphus jujube, Tripterygium Wilfordii, Diospyros kaki* Thunb., *Euphorbia spp,* Apiaceae Family, especially *Daucus carota, Trifolium pratense, Glycine max (soy), Medicago sativa, Arachis hypogaea, Cicer arietinum, Vaccinium myrtillus, Morus nigra, Vaccinium corymbosum, Prunus cerasus, Vaccinium oxycoccos, Sambucus berries, Crataegus rhipidophylla, Rubus idaeus, Malus spp, Pyrus spp, Prunus spp, Magnolia officinalis, Aloe vera, Cuscuta chinensis, Euphorbia pekinensis, Glycine max, Coccinia grandis, Pinus sylvestris, Rosmarinus officinalis, Sambucus nigra, Hypericum perforatum, Toona sinensis, Moringa oleifera, Cichorium endivia, Ilex spp, Lyngbya spp, Miconia prasina, Salvia divinorum, Ruta graveolens L., Brassica spp* or *plants containing β-caryophyllene including Acanthospermum hispidum, Callicarpa integerrima*, *Canarium parvum Leen, Copaifera multijuga, Copaifera multijuga Hayne, Copaifera reticulata Ducke, Croton heliotropiifolius, Euphorbia cotinifolia, Glechon marifolia, Guarea humaitensis, Hyptis pectinate, Lantana montevidensis, Leucas indica, Leucas aspera, Melampodium divaricatum, Mydocarpus fraxinifoliu, Murraya paniculata, Myrica rubra, Newbouldia laevis Peristrophe bicalyculata, Leucas indica, Leucas aspera, Melampodium divaricatum, Mydocarpus fraxinifolius, Murraya paniculata, Myrica rubra, Newbouldia laevis, Peristrophe bicalyculata, Phoenix dactylifera, Pinus halepensis, Piper guineense, (white), Piper guineense*,*( black), Piper Nigrum, Piper duckei, Plectranthus rugosus, Plectranthus neochilus, Stachys cretica, Tabernaemontana catharinensis, Teucrium chamaedrys, Teucrium polium, Teucrium flavum, Teucrium divaricatum*, *Valeriana alliariifolia, Veronia albicans,* or *plants containing α-humulene (a-Caryophyllene)* including *Humulus lupulus* and *Zingiber spp;*
- *Aromaticum* plants, in particular *Matricaria chamomilla* (camimile), *Syzygium aromaticum* (clove), *Mentha arvensis, Mentha piperita* (mint) or *Salvia Rosmarinus* (rosemary);
- Microalgae and algae containing fuxoxanthin, astaxanthin, eicosapentaenoic acid (EPA) or docosahexaenoic acid (DHA);
- Fish oils that contain omega-3 fatty acids; and
- Plant oils obtained from *Olea europaea* (olive), *Persea americana* (avocado), *Linum usitatissimum* (flaxseed), *Vitis vinifera* (grapeseed), *Punica granatum* (pomegranate) or *Oputia dillenii* (prickly pear).

In a particular embodiment, the bioactive ingredient is selected from the group consisting of:
- Phytocannabinomimetic plant species, in particular *Aframomum melegueta, Zingiber officinale, Piper nigrum, Cannabis sativa* (hemp), *Echinacea angustifolia, Echinacea purpurea, Eurotium repens, Magnolia officinalis, Rhododendron dauricum*, *Rhododendron anthopogonoides, Radula perrottetii, Piper guineense, Piper methysticum, Sanguinaria canadensis, Ziziphus jujube, Euphorbia spp, Brassica spp, Glycyrrhiza spp,* plants containing *β-caryophyllene*, or plants containing *α-humulene;*
- *Aromaticum* plants, in particular *Matricaria chamomilla* (camimile), *Syzygium aromaticum* (clove), *Mentha arvensis, Mentha piperita* (mint) or *Salvia Rosmarinus* (rosemary);
- Microalgae and algae containing fuxoxanthin, astaxanthin, eicosapentaenoic acid (EPA) or docosahexaenoic acid (DHA);
- Fish oils that contain omega-3 fatty acids; and
- Plant oils obtained from *Olea europaea* (olive), *Persea americana* (avocado), *Linum usitatissimum* (flaxseed), *Vitis vinifera* (grapeseed), *Punica granatum* (pomegranate) or *Oputia dillenii* (prickly pear).

In a preferred embodiment, the plant extract is selected from the group consisting of *Aframomum.* Preferably, the plant extract comprising a bioactive ingredient is an extract of Aframomum, preferably *Aframomum melegueta.* More preferably, the plant extract comprising a bioactive ingredient is the extract of *Aframomum melegueta* of the invention.

The complex coacervates of the invention comprise a plant protein mixed with a second polysaccharide selected from a pectin.

In a particular embodiment, the plant protein is selected from vegetable proteins. In a particular embodiment, the plant protein is not selected from the group consisting of whey protein, potato protein, faba bean protein, soybean protein, rice protein, hemp protein and fruit proteins.

In a particular embodiment, the plant protein is selected from pea protein, *Centella asiatica* (commonly known as gotu kola) protein or *Vigna subterranea* (commonly known as bambara nut) protein. In a particular embodiment, the pea pertains to *Pisum sativum.* Preferably, the plant protein is pea protein. In a particular embodiment of the former, the pea protein is a pea protein extract comprising at least 70%, preferably at least 75% of protein, more preferably at least 80% of protein. This embodiment means that the protein is highly concentrated in the extract.

In this way, in a particular embodiment, the plant protein is pea protein and/or wherein the first polysaccharide is gum arabic.

A "pectin" is a heteropolysaccharide mainly comprised of galacturonic acid, which is the oxidized form of galactose.

Pectins can be esterified with methanol, for example. The degree of methylation is defined as the percentage of carbonyl groups that are esterified with methanol. The common general knowledge identifies pectins as "high-methoxy" when they have more than 50% of the carboxyl groups methylated, and "low-methoxy pectins" when 50% or less of the carboxyl groups are methylated. Thus, a "pectin having a methylation degree not greater than 50%" is to be understood as a pectin wherein no more of 50% of the carboxyl groups of pectin are methylated, i.e., a low-methoxy pectin.

In a preferred embodiment, the pectin is a pectin having a methylation degree no greater than 50%.

In a particular embodiment, the pectin is citrus pectin.

The pectin and protein at least partially cover the first polysaccharide. In a particular embodiment, the pectin and protein are intertwined with the first polysaccharide. Preferably, the pectin, the protein, the first polysaccharide and the plant extract comprising a bioactive ingredient are intertwined and part of a sponge-like structure with no distinct layers.

In a particular embodiment, the weight ratio between the first polysaccharide and the plant extract comprising a bioactive ingredient is from 0.5:1 to 4:1, preferably 1:1 to 3:1. In a preferred embodiment, the ratio is 2:1.

In another particular embodiment, the weight ratio between the protein and the plant extract comprising a bioactive ingredient is from 0.2:1 to 1:1, preferably from 0.25:1 to 0.75:1. In a preferred embodiment, the ratio is 0.5:1.

In another particular embodiment, the weight ratio between the second polysaccharide (pectin) and the plant extract comprising a bioactive ingredient is from 0.2:1 to 1:1, preferably from 0.25:1 to 0.75:1. In a preferred embodiment, the ratio is 0.5:1.

In a particular embodiment, the complex coacervate of the invention is devoid of any further polysaccharides or proteins, other than the first polysaccharide, which is preferably gum arabic, the protein, which is preferably pea protein, and the second polysaccharide, which is pectin.

In another embodiment, the complex coacervate of the invention is a powder.

In another embodiment, the complex coacervate does not require the presence of a divalent inorganic salt, preferably a divalent salt, more preferably of any salt. In a preferred embodiment, the complex coacervate does not comprise a divalent inorganic salt, preferably a divalent salt, more preferably any salt.

### Method for obtaining the complex coacervates of the invention

In a second aspect, the invention is directed at a method for the preparation of the complex coacervate of the previous aspect, comprising the steps of:
a. Providing a mixture of a plant extract comprising a bioactive ingredient and a first polysaccharide in a hydroalcoholic solvent;
b. Submitting the mixture to an evaporation step to at least partially evaporate the alcoholic solvent;
c. Adding a plant protein and a second polysaccharide selected from a pectin having a methylation degree not greater than 50% to the mixture of step (b);
d. Adjusting the pH of the mixture of step (c) to a range of 3.5-4.5; and
e. Drying the mixture of step (d).

In a particular embodiment, step (a) comprises mixing the plant extract comprising a bioactive ingredient and the first polysaccharide, preferably in the hydroalcoholic solvent.

In a particular embodiment, the plant extract comprising a bioactive ingredient is provided in step (a) as an alcoholic extract, preferably ethanol. In a particular embodiment, the plant extract comprising a bioactive ingredient is an alcoholic extract of seeds of *Aframomum melegueta,* more preferably the extract of the invention as disclosed herein.

In a particular embodiment, the weight ratio between the first polysaccharide and the plant extract comprising a bioactive ingredient is from 0.5:1 to 4:1, preferably 1:1 to 3:1. Most preferably it is 2:1.

In a particular embodiment, the first polysaccharide is provided in step (a) as an aqueous solution. A non-limiting example would be to first dissolve the polysaccharide as a solid in water, and provide this solution in step (a).

In a preferred embodiment, the first polysaccharide is gum arabic (also known as gum acacia). Gum arabic is a water-soluble, edible complex mixture of glycoproteins and polysaccharides, predominantly polymers of arabinose and galactose.

Step (b) of the method for obtaining the complex coacervates of the invention requires submitting the mixture to an evaporation step to at least partially evaporate the alcoholic solvent. The purpose of this step is to increase the concentration of the mixture prepared in step (a) by reduction of the solvent volume. In a preferred embodiment, the hydroalcoholic mixture is not an azeotropic mixture. Under this scenario, the evaporation will significantly reduce the alcohol fraction rendering the hydroalcoholic mixture into an aqueous mixture.

In a particular embodiment, step (b) comprises fully evaporating the alcoholic solvent. The skilled person will readily understand that this embodiment requires that the hydroalcoholic mixture is not an azeotropic mixture.

In a particular embodiment, step (b) comprises fully evaporating the alcoholic solvent under vacuum at a temperature between 25 °C and 80 °C, preferably between 50 °C and 70 °C. In a more preferred embodiment, the temperature is 65 °C.

In a preferred embodiment of the former, the alcoholic solvent is evaporated under a vacuum of 0.05 to 0.9 bar, preferably from 0.05 to 0.5 bar, more preferably from 0.05 to 0.3 bar and even more preferably from 0.1 to 0.2 bar.

In a particular embodiment, step (b) comprises evaporating the alcoholic solvent to a point where the resulting mostly-aqueous solution comprises from 20 to 40% (w/w), preferably 25-35% (w/w), of total dissolved solids. In a preferred embodiment, said mostly-aqueous solution comprises less than 5 wt% of alcohol, more preferably less than 1 wt%, even more preferably less than 0.1 wt% of alcohol.

Step (c) requires adding a plant protein and a second polysaccharide selected from a pectin having a methylation degree not greater than 50% to the mixture of step (b) described above.

Unless mentioned otherwise, or unless it is physically impossible to apply, all of the particular and preferred embodiments described above under "Complex coacervates of the invention" apply mutatis mutandis to the method for obtaining the complex coacervates. As a mere example of this statement, in a particular embodiment, the plant protein is a pea protein.

Step (d) requires adjusting the pH of the mixture of step (c) to a range of 3.5-4.5.

In a preferred embodiment, the pH is adjusted to a value at least of 3.6, more preferably at least 3.7 and even more preferably at least 3.8. In another preferred embodiment, the pH is adjusted to a value not greater than 4.4, not greater than 4.3, and even more preferably not greater than 4.2. In a most preferred embodiment, the pH is adjusted to a range of 3.8-4.2.

The skilled person in the art will know how to achieve the desired pH value, for example by addition of a base or an acid, depending on the initial pH value.

In a particular embodiment, the pH is adjusted with HCl. If needed, the pH can be raised with NaOH.

Step (e) requires drying the mixture of step (d). At this point the mixture comprises the complex coacervates of the invention in an acidic aqueous environment. The drying methods of such environments is known to the skilled person in the art, for example by vacuum drying, rotavapor, spray drying and freeze drying, among others.

In a particular embodiment, step (e) comprises drying the mixture via spray drying.

When provided as a dry powder, the complex coacervates of the present invention exhibit improved handling and processing of the plant extract comprising a bioactive ingredient, for example extracts of *Aframomum melegueta,* when compared to the same ingredients before treatment, enhancing their fluidity, density, and hygroscopic properties. These improvements facilitate easier handling during manufacturing, packaging, and distribution processes, streamlining production workflows and reducing operational costs. Moreover, the enhanced fluidity and density of the product contribute to improved dispersibility and solubility, enhancing consumer convenience and satisfaction.

In a particular embodiment, step (e) produces the complex coacervates of the invention as microcapsule powders (obtained by drying).

If needed, the resulting complex coacervates can be mixed with further ingredients, for example for adjusting the final concentration of the plant extract comprising a bioactive ingredient.

In a third aspect, the invention is also directed at a complex coacervate obtained according to the method described in this section.

The method described in this section, and the complex coacervates described above help in the masking of undesirable flavors and odors, which is of particular interest when the plant extract comprising a bioactive is an extract of *Aframomum melegueta* considering the high pungency of the vanilloids compounds. They offer protection against oxidation of active ingredients, improving the shelf-life of a potentially unstable product, enhance the dispersibility and stability of the bioactive ingredients in aqueous solutions, which opens the door to applications in beverages, allow the optional conversion of an oily extract into a powdered product and reduce the losses of volatile components.

### Extract of Aframomum melegueta

The background section explains what is to be understood as *Aframomum melegueta.* In the present invention, *Aframomum melegueta* is *Aframomum melegueta* K.Schum. identified by its World Flora Online (wfo) id: 0000338092.

A fourth aspect is directed at an extract of *Aframomum melegueta,* comprising:
- from 4 to 20 wt% of 6-shogaol;
- from 20 to 55 wt% of 6-paradol; and
- from 25 to 70 wt% of 6-gingerol;
the wt% being expressed as dry weight, with respect to the sum of the dry weights of 6-shogaol, 6-paradol and 6-gingerol.

The compounds 6-shogaol, 6-paradol and 6-gingerol are vanilloids, i.e., they share a vanillyl group structure (Figure 1).

The IUPAC name of 6-shoagol is (4E)-1-(4-hydroxy-3-methoxyphenyl)dec-4-en-3-one. The IUPAC name of 6-paradol is 1-(4-hydroxy-3-methoxyphenyl)-decan-3-one. The IUPAC name of 6-gingerol is (5S)-5-hydroxy-1-(4-hydroxy-3-methoxyphenyl)-decan-3-one.

The phytochemical profile of the *Aframomum melegueta* extract of the invention is such that there is from 4 to 20 wt%, preferably from 9 to 15 wt% of 6-shogaol; from 20 to 55 wt%, preferably from 24 to 39 wt% of 6-paradol; and from 25 to 70 wt%, preferably from 31 to 55 wt% of 6-gingerol, the wt% being expressed as dry weight, with respect to the sum of the dry weights of 6-shogaol, 6-paradol and 6-gingerol. Without wishing to be bound by a particular theory, the inventors believe that this specific phytochemical profile is responsible for the effects seen in preclinical and clinical trials, as shown in Example 8.

The weight percentage values are expressed as ranges, and the sum of the weight percentage values is not greater than 100%.

In a particular embodiment, the sum of the wt%, expressed as dry weight, of 6-shogaol, 6-paradol and 6-gingerol is at least 20 wt%, at least 30 wt%, preferably at least 35 wt%, most preferably at least 40 wt% of the total dry weight of the extract.

In another particular embodiment, compatible with the previous one, the sum of the wt%, expressed as dry weight, of 6-shogaol, 6-paradol and 6-gingerol is not greater than 80 wt%, not greater than 70 wt%, preferably not greater than 65 wt%, most preferably not greater than 60 wt% of the total dry weight of the extract.

In a preferred embodiment, the sum of the wt%, expressed as dry weight, of 6-shogaol, 6-paradol and 6-gingerol is from 30 wt% to 70 wt%, more preferably from 35 wt% to 65 wt%, and even more preferably from 40 wt% to 60 wt%, of the total dry weight of the extract.

In a particular embodiment, the *Aframomum melegueta* extract further comprises at least one compound selected from the group consisting of 3-(s)-acetyl-1-(49-hydroxy-39,59-dimethoxy-phenyl)-7-(30,40,50-trihydroxyphenyl)heptane, 8-dehydrogingerdione, 6-dehydroparadol, 3,5-diacetoxy-1-(39,49-dihy-droxylphenyl)-7-(30,40-dihydroxy-50-methoxyphenyl)heptane, dihydrogingerenone (a,b), dihydro-6-paradol, centrolobol, 8-gingerol, 4-[2-(5-butylfuran-2-yl)ethyl]-2-methoxyphenol, 3s,5s-6-gingerdiols, 3r,5s-6-gingerdiols, methyl-6-gingerol, rac-6-dihydroparadol, 3-hydroxy-1-(4-hydroxy-3-methoxyphenyl)dec-3-en-5-one and 5-hydroxy-1-(4-hydroxy-3-methoxyphenyl)-dec-4-en-3-one (two enolic tautomers), 6-gingerdione, (s)-9-hydroxy-6-paradol, (9s)-3,9-dihydroxydihydro-6-paradol, (3s,5s)-3,5-dihydroxy-1-(4-hydroxy-3-methoxyphenyl)decane, 4-gingerdiol, 1-(4-hydroxy-3-methoxyphenyl)-7-(4-hydroxyphenyl)-3 heptanone, (4e)-1-(4-hydroxy-3-methoxyphenyl)-7-(4-hydroxyphenyl)-(4e)-4-hepten-3-one, 8-dehydrogingerdione and zingerone. preferably, the *aframomum melegueta* extract further comprises at least one compound selected from the group consisting of 8-dehydrogingerdione, 6-dehydroparadol, 8-gingerol, methyl-6-gingerol, 3-hydroxy-1-(4-hydroxy-3-methoxyphenyl)dec-3-en-5-one and 5-hydroxy-1-(4-hydroxy-3-methoxyphenyl)-dec-4-en-3-one (two enolic tautomers), 6-gingerdione, (s)-9-hydroxy-6-paradol, 8-dehydrogingerdione and zingerone

In another particular embodiment, compatible with the previous paragraph, the *Aframomum melegueta* extract further comprises at least one compound selected from the group consisting of (+)-3-carene, (e)-p-ocimene, (e)-β-ocimene, 1,6-octadienenol, 1,8-cineole, 2-octyl acetate, a-bisaboiene, allo-aromadendren, bicyclogermacren, caryophylladienol i, caryophyllene-oxide, e-nerolidol, epi-bicyclosesquiphellandrene, eugenol, germacrene d, germacrene-d, hexamethylene, humulene oxide i, humulene oxide ii, limonene, linalool, linalool, linalyl acetate, myrcene, naphthalene, nerolidol, octadec-9-enoic acid, p-bisabolene, p-cymene, pentadecane, sabinene, zingerone, α-caryophyllene, α-guaiene, α-humulene, α-humulene epoxide, α-phellandrene, α-pinene, α-terpineol, β-caryophyllene, β-caryophyllene oxide, β-cubebene, β-pinene, β-selinene, γ-cadinene, γ-elemene, γ-terpinene, δ-cadinene and δ-guaiene. Preferably, the *Aframomum melegueta* extract further comprises at least one compound selected from the group consisting of 1,8-cineole, caryophyllene oxide, e-nerolidol, eugenol, germacrene d, humulene oxide i, humulene oxide ii, limonene, linalool, nerolidol, α-humulene, β-caryophyllene, β-pinene and γ-elemene.

In another particular embodiment, compatible with the two previous paragraphs, the *Aframomum melegueta* extract further comprises at least one compound selected from the group consisting of 1,2-dipalmitin, 1,3-dipalmitic 2-stearin, cholesteryl, cholesteryl heptadecanoate, cholesteryl palmitate, corymbolone, n-hexadecanoic acid ethyl ester, trilinolein, trilinolein, trimyristin, triolein, tripalmitolein and γ-sitosterol.

In yet another particular embodiment, compatible with the three previous paragraphs, the *Aframomum melegueta* extract further comprises at least one compound selected from the group consisting of oleanolic acid, dihydroxybenzoic acid, hydroxybenzoic acid, benzoic acid, coumaric acid and dimethoxyphenylacetic acid, buphanidrine, ambelline, powelline, undulatine, crinane-3α-ol, crinamidine, 6-hydropowelline, 6-hydroxybuphanidrine-1β, 2β-epoxyambelline, epoxy-3,7-dimethoxycrinane-1 1-one, 6-hydroundulatine, senkirkine, emetine, thalicarpin, colchicine, angustifoline, sparteine, lupanine, 13-alphahydrorhombifoline, angustifoline, safrole, piperine, myristicin, dillapiole, indicine-n-oxide, monocrotaline, senecionine, echitamine, echitammidine, akuamidine, cin-chonidine, cinchonine, oxoassoanine, voacangine, theophylline and paclitaxel.

In a particular embodiment, the *Aframomum melegueta* extract is a seed extract, i.e., it is an extract of seeds of *Aframomum melegueta.*

In a particular embodiment, the *Aframomum melegueta* extract is a hydroalcoholic extract. Preferably, the extract is an ethanol water extract.

In another particular embodiment, the *Aframomum melegueta* extract is a dry extract.

### Method for obtaining the extract of Aframomum melegueta of the invention

A fifth aspect is directed at a method for obtaining an extract of *Aframomum melegueta,* comprising the steps of:
a. Providing seeds of *Aframomum melegueta;*
b. Subjecting the seeds to
   - a hydroalcoholic solvent comprising from 20% to 90% ethanol, or
   - CO₂ supercritical fluid extraction, or
   - CO₂ supercritical fluid extraction with 5% to 40% ethanol;
c. Raising the temperature to between 30 °C and 90 °C; and
d. Separating the liquid, or supercritical fluid, fraction from the solid residue, said fraction containing the extract.

In step (a), the seeds may optionally be dried seeds. In a particular embodiment, the seeds, preferably dried seeds, are milled and homogenized to yield a fine powder.

In a particular embodiment, in step (b), the hydroalcoholic solvent comprises from 20% to 90% ethanol. Preferably the hydroalcoholic solvent comprises an ethanol:water mixture at a ratio of from 20:80 to 90:10, from 25:75 to 90:10, preferably from 30:70 to 90:10, more preferably from 30:70 to 80:20 and even more preferably 70:30 (v/v). The (v/v) notation refers to volume ratios, for example, a 60:40 (v/v) means a solvent mixture prepared with 60 volume parts of ethanol and 40 volume parts of water.

The skilled person will readily know which amount of solvent is needed for the extraction, but a preferred embodiment is one wherein the seeds to hydroalcoholic solvent ratio is from 1:5 to 1:12 (w/v), more preferably from 1:7 to 1:12 (w/v), even more preferably 1:10 (w/v). The (w/v) notation refers to weight (in grams) volume (in mL) ratios, for example, 1:10 means 1 gram of seeds per 10 mL of solvent.

In another particular embodiment, in step (b), the seeds are subjected to a CO₂ supercritical fluid extraction.

In another particular embodiment, in step (b), the seeds are subjected to a CO₂ supercritical fluid extraction and from 5% to 40% of ethanol as co-solvent. In a preferred embodiment, the supercritical fluid extraction is conducted under pressure of from 10 to 30 MPa, preferably from 15 to 30 MPa.

Step (c) involves raising the temperature to between 30 °C and 90 °C. In a particular embodiment, the temperature is kept at least for 30 minutes, preferably at least for 60 minutes. In a preferred embodiment, the temperature is kept at least for 90 minutes. The skilled person will readily understand that the temperature can be kept for longer times if appropriate, for example overnight (10 hours), but the extraction process will not be noticeably improved. In this sense, a particular embodiment is that where the temperature is kept for no longer than 8 hours, no longer than 4 hours, preferably no longer than 3 hours.

In a preferred embodiment, step (c) is conducted at a temperature between 30 °C and 80 °C, between 40 °C and 80 °C, between 50 °C and 80 °C, more preferably between 60 °C and 80 °C, and more preferably between 65 °C and 75 °C. In most preferred embodiment, the temperature is 70 °C.

In a preferred embodiment, step (c) also comprises the stirring of the mixture which comprises the seeds and the hydroalcoholic solvent.

Once treated as described above, the seeds are extracted and a liquid fraction, or a supercritical fluid, and a solid residue is obtained. The sought extract of *Aframomum melegueta* is found in the liquid, or supercritical fluid, fraction. If a hydroalcoholic solvent is used, then the liquid fraction comprises said solvent. Otherwise, the supercritical fluid carries a liquid fraction comprising an oleoresin. In this way, step (d) of the method comprises separating the liquid fraction or supercritical fluid from the solid residue, said liquid fraction containing the extract.

The skilled person will readily understand how to separate the fractions. One convenient way, when a hydroalcoholic solvent is used, is to centrifuge the mixture and retrieve the supernatant. Another convenient way is to submit the extract to vacuum filtration. In this way, in a particular embodiment, step (d) comprises separating the liquid fraction from the solid residue by centrifugation or vacuum filtration. Another convenient way, when a CO₂ supercritical fluid extraction is carried out, is to simply evaporate the CO₂.

This aspect leads to the production of the extract of *Aframomum melegueta* of the invention, which can comprise a hydroalcoholic solvent. If required, this can be dried, concentrated to oleoresin or used as is.

In a particular embodiment, the method for obtaining an extract of *Aframomum melegueta,* comprises the steps of:
a. Providing seeds of *Aframomum melegueta;*
b. Subjecting the seeds to
   - a hydroalcoholic solvent comprising from 20% to 90% ethanol;
c. Raising the temperature to between 30 °C and 90 °C; and
d. Separating the liquid fraction from the solid residue, said fraction containing the extract.

In another particular embodiment, the method for obtaining an extract of *Aframomum melegueta,* comprises the steps of:
a. Providing seeds of *Aframomum melegueta;*
b. Subjecting the seeds to
   - CO₂ supercritical fluid extraction, or
   - CO₂ supercritical fluid extraction with 5% to 40% ethanol;
c. Raising the temperature to between 30 °C and 90 °C; and
d. Separating the supercritical fluid fraction from the solid residue, said fraction containing the extract.

A sixth aspect of the present invention is directed at an extract of *Aframomum melegueta* obtainable according to the method described above. All particular and preferred embodiments apply *mutatis mutandis* to this aspect.

### Non-therapeutic uses

The authors have also surprisingly found that *Aframomum melegueta* modulates the endocannabinoid system.

Thus, a seventh aspect of the invention is direct at the non-therapeutic use of the extract of *Aframomum melegueta* of the invention, for preventing and/or reducing stress, anxiety, mood disturbances, and/or sleep disorders.

In a further aspect, the invention is directed at the non-therapeutic use of the complex coacervate of the invention comprising an extract of *Aframomum melegueta,* for preventing and/or reducing stress, anxiety, mood disturbances, and/or sleep disorders.

Unless mentioned otherwise, or unless it is physically impossible to apply, all of the particular and preferred embodiments described above under "Extract of *Aframomum melegueta"* and "Complex coacervates of the invention" apply *mutatis mutandis* to the non-therapeutic uses.

Stress, within the context of this disclosure, encompasses a psychological and physiological response triggered by challenging circumstances, characterized by feelings of tension and apprehension. It serves as a natural mechanism prompting individuals to confront and navigate through adverse situations encountered in daily life. People under stress experience mental and physical symptoms, such as irritability, anger, fatigue, muscle pain and digestive troubles.

Recognizable symptoms of stress encompass both physical and emotional manifestations, encompassing diarrhea or constipation, forgetfulness, frequent aches and pains, headaches, lack of energy or focus, sexual problems, stiff jaw or neck, tiredness, upset stomach, use of alcohol or drugs to relax, weight loss or gain.

In a particular embodiment, the invention is directed at the non-therapeutic use of the extract of *Aframomum melegueta* according to the invention, for preventing and/or reducing stress, by reducing at least one of tension, apprehension, fatigue or tiredness, irritability, anger, depression perception, forgetfulness, lack of energy or focus, sexual problems, fatigue, stiff jaw or neck, muscle pain, digestive troubles such as diarrhea or constipation or upset stomach, substance abuse (alcohol or drugs), weight loss, weight gain, and/or by increasing vigor (stamina).

The extract of *Aframomum melegueta* of the invention modulates the endocannabinoid system (ECS) to a similar extent as phytocannabinoid cannabidiol (CBD) does. The ECS is a biological system composed of endocannabinoids, which are endogenous lipid-based retrograde neurotransmitters that bind to cannabinoid receptors, and cannabinoid receptor proteins. It is widely expressed in the limbic system, prefrontal cortical areas, and brain structures regulating neuroendocrine stress responses, which explains the key role of this system in the control of emotions.

In particular, the extract:
- Modulates fatty acid amide hydrolase (FAAH), enzyme responsible of the catabolism of the endogenous cannabinoid anandamide (AEA) and work partial antagonist modulator of CB1R. The inhibition of FAAH maintain endocannabinoid tone which is associated with anxiolytic effects through the CB1R;
- Works as an agonist allosteric modulator of CB2R. The activation of CB2R reduce the inflammatory and oxidative state cause by stress situation;
- Activates and could desensitize the transient receptor potential cation channel subfamily V members 1(TPRV1). At central system level, desensitize of TPRV1 has been associated with an improvement in the anxiolytic state. And at peripheral system level the activation is related to pain;
- Acts as an allosteric modulator of the serotonin type 1A (5-HT1A) receptor. Activation of 5-HT1A receptors has been associated with promoting sleep and increasing sleep duration. Beside activation of the 5-HT1A receptor has been associated with the modulation of serotonin levels in the brain, which can impact mood regulation; and
- Modulate gamma-aminobutyric acid (GABA)-benzodiazepine receptor complex, related to anxiolytic and sedative effect.

The extract of *Aframomum melegueta* of the invention prevents and/or reduces anxiety, i.e., it exhibits an anxiety improvement effect.

The extract of *Aframomum melegueta* of the invention prevents and/or reduces mood disturbances. Particularly, the extract improves the state of minds of those who ingest it.

The extract of *Aframomum melegueta* of the invention also prevents and/or reduces sleep disorders. Sleep disorders include any disorder related to the quality of sleep, and in this context the extract of *Aframomum melegueta* of the invention also improves sleep and rest. In the context of the present invention, the expression "sleep disorders" refers to non-medical conditions, i.e. refers to non-pathological processes.

This means that preferably the extract of *Aframomum melegueta* of the invention finds, at least for one of the following non-therapeutic uses:
- For preventing stress;
- For preventing anxiety;
- For preventing mood disturbances;
- For preventing sleep disorders;
- For treating stress;
- For treating anxiety;
- For treating mood disturbances; and
- For treating sleep disorders.

### Nutraceutical compositions

A final aspect of the invention is directed at a nutraceutical composition comprising an extract of *Aframomum melegueta,* or comprising a complex coacervate comprising an extract of *Aframomum melegueta,* as described herein.

Preferably, the nutraceutical composition is for preventing and/or reducing stress, anxiety, mood disturbances, and/or sleep disorders.

Examples of nutraceutical compositions are food and beverage products. Preferably, said composition is for absorption in the gastrointestinal tract.

### EXAMPLES

The present invention will now be described by way of examples which serve to illustrate the construction and testing of illustrative embodiments. However, it is understood that the present invention is not limited in any way to the examples below.

### Example 1a. Process for obtaining dried Aframomum melegueta seeds.

The traditional drying method consisted of drying the pods in the sun for a week at a temperature of 30 °C to 40 °C. After the first week of drying, the pods were covered with ash. The ash helped to preserve the pods for long periods of storage.

### Example 1b. Process for obtaining dried Aframomum melegueta seeds.

The process of obtaining the dried seeds of *Aframomum melegueta* consisted of cutting the pod to remove the whitish sac containing the seeds. The whitish sac was soaked in water for two to three days. After three days, the whitish sac was rubbed together as many times as possible to remove the seeds from the sac. The seeds were thoroughly washed and dried for one day at a temperature of 25 °C to 40 °C to ensure effective drying.

### Example 2a. Preparation of an ethanolic extract of Aframomum melegueta according to the invention.

An extract of *Aframomum melegueta* was prepared from dried seeds (see Example 1a) which were ground and sieved to a particle size no larger than 2 mm. 260 g of this plant material was placed in 1820 mL of a hydroalcoholic solution containing 50 % ethanol (v/v) and kept at 50 °C for 1 hour with constant and vigorous stirring.

After this time, the extracted material was separated from the residue by vacuum filtration through 0.85 mm and then through 0.05 mm pore size filters to obtain the hydroalcoholic extract.

### Example 2b. Preparation of an ethanolic extract of Aframomum melegueta according to the invention.

An extract of *Aframomum melegueta* was prepared from dried seeds (see Example 1a) which were ground and sieved to a particle size not exceeding 2 mm. 100 g of this plant material was placed in 1200 mL of a hydroalcoholic solution containing 90% ethanol (v/v) and kept at 90 °C for 90 minutes with constant and vigorous stirring. After this time, the extracted material was separated from the residue by centrifugation at 890 rcf to obtain the hydroalcoholic extract.

### Example 2c. Preparation of an ethanolic extract of Aframomum melegueta according to the invention.

An extract of *Aframomum melegueta* was prepared from dried seeds (see Example 1a) which were ground and sieved to a particle size of less than 1 mm. 100 g of this plant material was placed in 1200 mL of a hydroalcoholic solution containing 30% ethanol (v/v) and kept at 80 °C for 90 minutes with constant and vigorous stirring. After this time, the extracted material was separated from the residue by vacuum filtration through 0.85 mm and then thorough 0.075 mm pore size filters to obtain the hydroalcoholic extract.

### Example 2d. Preparation of an ethanolic extract of Aframomum melegueta according to the invention.

An extract of *Aframomum melegueta* was prepared from dried seeds (see Example 1a) which were ground and sieved to a particle size of less than 1 mm. 1000 g of this plant material was placed in 10000 mL of a hydroalcoholic solution containing 70% ethanol (v/v) and kept at 75 °C for 60 minutes with constant and vigorous stirring. After this time, the extracted material was separated from the residue by centrifugation at 890 rcf to obtain the hydroalcoholic extract.

### Example 2e. Preparation of an extract of Aframomum melegueta by means of CO₂ supercritical fluid extraction, according to the invention.

The extract of *Aframomum melegueta* was obtained by CO₂ supercritical fluid extraction. *Aframomum melegueta* dried and ground seeds (100.0 g) were placed in the extraction cell where they were exposed to supercritical CO₂ for 60 minutes in static mode under the following temperature and pressure conditions: 50 °C and 20.7 MPa. At the end of the extraction time, the extraction cell was depressurized and the extract was collected as oleoresin.

### Example 2f. Preparation of an extract of Aframomum melegueta by means of CO₂ supercritical fluid extraction, according to the invention.

The extract of *Aframomum melegueta* was obtained by CO₂ supercritical fluid extraction. Dried and ground seeds of *Aframomum melegueta* (100.0 g) were placed in the extraction cell where they were exposed to supercritical CO₂ for 60 minutes in static mode under the following temperature and pressure conditions: 40 °C and 17.9 MPa. At the end of the extraction time, the extraction cell was depressurized and the extract (oleoresin) was collected.

### Example 2g. Preparation of an extract of Aframomum melegueta by means of CO₂ supercritical fluid extraction, according to the invention.

The extract of *Aframomum melegueta* was obtained by CO₂ supercritical fluid extraction. Dried and ground seeds of *Aframomum melegueta* (100.0 g) were placed in the extraction cell where they were exposed to supercritical CO₂ for 90 minutes in static mode under the following temperature and pressure conditions: 45 °C and 30 MPa. At the end of the extraction time, the extraction cell was depressurized and the extract was collected as oleoresin.

### Example 2h. Preparation of an extract of Aframomum melegueta by means of CO₂ supercritical fluid extraction and ethanol as co-solvent, according to the invention.

The extract of *Aframomum melegueta* was obtained by CO₂ supercritical fluid extraction. Dried and ground seeds of *Aframomum melegueta* (30.0 g) were placed in the extraction cell where they were exposed to supercritical CO₂ for 60 minutes in static mode under the following temperature and pressure conditions: 45 °C and 30 MPa. 40% ethanol was used as co-solvent. At the end of the extraction time, the extraction cell was depressurized and the extract was collected as oleoresin.

Finally, the extract was desolventized in a rotary evaporator at 65 °C under vacuum (< 0.3 bar).

### Example 2i. Preparation of an extract of Aframomum melegueta by means of CO₂ supercritical fluid extraction and ethanol as co-solvent, according to the invention.

The extract of *Aframomum melegueta* was obtained by CO₂ supercritical fluid extraction. Dried and ground seeds of *Aframomum melegueta* (30.0 g) were placed in the extraction cell where they were exposed to supercritical CO₂ for 90 minutes in static mode under the following temperature and pressure conditions: 40 °C and 17.9 MPa. 10% ethanol was used as cosolvent. At the end of the extraction time, the extraction cell was depressurized and the extract was collected.

Finally, the extract was desolventized in a rotary evaporator at 65 °C under vacuum (< 0.3 bar).

### Example 3a. Preparation of a complex coacervate according to the invention.

A hydroalcoholic extract of *Aframomum melegueta* was prepared according to the procedure described in Example 2d. In a first step, the first polysaccharide (gum arabic) was added to the hydroalcoholic solution in a ratio of 2:1 (w/w) with respect to the native botanical components contained in the extract, on a dry weight basis. This step helped to form an emulsion and to minimize the loss of the vanilloid compounds during the evaporation. In this particular example, 11.04 g of gum arabic was added to 750 mL of the hydroalcoholic extract containing 0.85 % (w/w) of total dissolved solids (i.e. 5.52 g of the native botanical components).

Prior to the formation of the coacervate, the ethanol in the extract was removed by rotary evaporation to a concentration of less than 0.5 % ethanol (w/w) at 65 °C under vacuum (< 0.3 bar).

After the ethanol removal and extract concentration step, 2.76 g of pea protein, as the protein, and 2.76 g of low-methoxyl pectin, as the second polysaccharide presenting an esterification degree of 27% to 33%, were added to the resulting concentrate. The sample was homogenized using an IKA T25 Ultra-Turrax^{®} at 8000-10000 rpm. The pH of the preparation was then adjusted to 4 with a 2N HCl solution while maintaining stirring. At this point, the complex coacervation microencapsulation took place. Finally, the sample was transferred to a spray-dryer to obtain a powdered extract.

### Example 3b. Preparation of a complex coacervate according to the invention.

A hydroalcoholic extract of *Aframomum melegueta* was prepared according to the procedure described in Example 2b. In a first step, the first polysaccharide (gum arabic) was added to the hydroalcoholic solution in a ratio of 2:1 (w/w) with respect to the native botanical components contained in the extract, on a dry weight basis. In this particular example, 12.06 g of gum arabic was added to 670 mL of the hydroalcoholic extract containing 1.04 % (w/w) of total dissolved solids (i.e. 6.03 g of the native botanical components).

Prior to the formation of the coacervate, the ethanol in the extract was removed by rotary evaporation to a concentration of less than 0.5 % ethanol (w/w) at 65 °C under vacuum (< 0.3 bar).

After the ethanol removal and extract concentration step, 3.02 g of pea protein, as the protein, and 3.02 g of low-methoxyl pectin, as the second polysaccharide presenting an esterification degree of 27% to 33%, were added to the resulting concentrate. The sample was homogenized using an IKA T25 Ultra-Turrax^{®} at 8000-10000 rpm. The pH of the preparation was then adjusted to 4.2 with a 2N HCl solution while maintaining stirring. At this point, the complex coacervation microencapsulation took place. Finally, the sample was transferred to a spray-dryer to obtain a powdered extract.

### Example 3c. Preparation of a complex coacervate according to the invention.

A hydroalcoholic extract of *Aframomum melegueta* was prepared according to the procedure described in Example 2b. In a first step, the first polysaccharide (gum arabic) was added to the hydroalcoholic solution in a ratio of 2:1 (w/w) with respect to the native botanical components contained in the extract, on a dry weight basis. In this particular example, 12.06 g of gum arabic was added to 670 mL of the hydroalcoholic extract containing 1.04 % (w/w) of total dissolved solids (i.e. 6.03 g of the native botanical components).

Prior to the formation of the coacervate, the ethanol in the extract was removed by rotary evaporation to a concentration of less than 0.5 % ethanol (w/w) at 65 °C under vacuum (< 0.3 bar).

After the ethanol removal and extract concentration step, 3.02 g of pea protein, as the protein, and 3.02 g of low-methoxyl pectin, as the second polysaccharide presenting an esterification degree of 27% to 33%, were added to the resulting concentrate. The sample was homogenized using an IKA T25 Ultra-Turrax^{®} at 8000-10000 rpm. The pH of the preparation was then adjusted to 4.0 with a 2N HCl solution while maintaining stirring. At this point, the complex coacervation microencapsulation took place. Finally, the sample was transferred to a spray-dryer to obtain a powdered extract.

### Example 3d. Preparation of a complex coacervate according to the invention.

A hydroalcoholic extract of *Aframomum melegueta* was prepared according to the procedure described in Example 2d. In a first step, the first polysaccharide (gum arabic) was added to the hydroalcoholic solution in a ratio of 2.65:1 (w/w) with respect to the native botanical components contained in the extract, on a dry weight basis. This step helped to form an emulsion and to minimize the loss of the vanilloid compounds during the evaporation. In this particular example, 14.63 g of gum arabic was added to 750 mL of the hydroalcoholic extract containing 0.85 % (w/w) of total dissolved solids (i.e. 5.52 g of the native botanical components).

Prior to the formation of the coacervate, the ethanol in the extract was removed by rotary evaporation to a concentration of less than 0.5 % ethanol (w/w) at 60 °C under vacuum (< 0.3 bar).

After the ethanol removal and extract concentration step, 4.42 g of pea protein, as the protein, and 2.94 g of low-methoxyl pectin, as the second polysaccharide presenting an esterification degree of 27% to 33%, were added to the resulting concentrate. The sample was homogenized using an IKA T25 Ultra-Turrax^{®} at 8000-10000 rpm. The pH of the preparation was then adjusted to 3.8 with a 2N HCl solution while maintaining stirring. At this point, the complex coacervation microencapsulation took place. Finally, the sample was transferred to a spray-dryer to obtain a powdered extract.

### Example 3e. Preparation of a complex coacervate according to the invention.

A hydroalcoholic extract of *Aframomum melegueta* was prepared according to the procedure described in Example 2d. In a first step, the first polysaccharide (gum arabic) was added to the hydroalcoholic solution in a ratio of 1.33:1 (w/w) with respect to the native botanical components contained in the extract, on a dry weight basis. This step helped to form an emulsion and to minimize the loss of the vanilloid compounds during the evaporation. In this particular example, 7.34 g of gum arabic was added to 750 mL of the hydroalcoholic extract containing 0.85 % (w/w) of total dissolved solids (i.e. 5.52 g of the native botanical components).

Prior to the formation of the coacervate, the ethanol in the extract was removed by rotary evaporation to a concentration of less than 0.5 % ethanol (w/w) at 55 °C under vacuum (< 0.3 bar).

After the ethanol removal and extract concentration step, 1.23 g of gotu kola protein, as the protein, and 2.45 g of low-methoxyl pectin, as the second polysaccharide presenting an esterification degree of 27% to 33%, were added to the resulting concentrate. The sample was homogenized using an IKA T25 Ultra-Turrax^{®} at 8000-10000 rpm. The pH of the preparation was then adjusted to 4 with a 2N HCl solution while maintaining stirring. At this point, the complex coacervation microencapsulation took place. Finally, the sample was transferred to a spray-dryer to obtain a powdered extract.

### Example 3f. Preparation of a complex coacervate according to the invention

Once the extract (oleoresin) was obtained according to the procedure described from example 2f, the complex coacervation microencapsulation process was carried out.

First, 8.88 g of the first polysaccharide, gum arabic, was dissolved in water in a ratio of 1:5 (w/w). Then, 4.44 g of the oleoresin was gradually added to the aqueous solution while stirring the mixtures using an IKA T25 Ultra-Turrax^{®} at 8000-10000 rpm. Gum arabic was added in a ratio of 2:1 (w/w) with respect to the weight of the oleoresin obtained after the CO₂ supercritical extraction.

Subsequently, 2.22 g of pea protein, as the protein, and 2.22 g of low-methoxyl pectin, as the second polysaccharide presenting an esterification degree of 27% to 33%, were added to the mixture while maintaining the stirring. The pH of the preparation was then adjusted to 3.8 with a 2N HCl solution while maintaining stirring. At this point, the complex coacervation microencapsulation took place. Finally, the sample was transferred to a spray-dryer to obtain a powdered extract.

### Example 3g. Preparation of a complex coacervate according to the invention

The extract (oleoresin) obtained according to the procedure described from example 2f was firstly dissolved in a 70% (w/w) ethanol:water solution in order to have an hydroalcholic extract.

In first place, 13.32 g of the first polysaccharide, gum arabic, was dissolved in water in a ratio of 1:5 (w/w). Afterwards, 4.44 g of the oleoresin was gradually added to the aqueous solution while the mixtures was stirred using an IKA T25 Ultra-Turrax^{®} at 8000-10000 rpm. Gum arabic was added in a ratio 3:1 (w/w) with respect to the weight of the oleoresin obtained after the CO₂ supercritical extraction. Ethanol was removed in a rotary evaporator at 65 °C under vacuum (< 0.3 bar) to a concentration of less than 0.5 % ethanol (w/w).

Subsequently, 3.33 g of pea protein, as the protein, and 1.11 g of low-methoxyl pectin, as the second polysaccharide presenting an esterification degree of 27% to 33%, were added to the mixture while maintaining the stirring. The pH of the preparation was then adjusted to 4.2 with a 2N HCl solution while maintaining stirring. At this point, the complex coacervation microencapsulation took place. Finally, the sample was transferred to a spray-dryer to obtain a powdered extract.

### Example 3h. Preparation of a complex coacervate according to the invention

The extract (oleoresin) obtained according to the procedure described from example 2i was firstly dissolved in a 70% (w/w) ethanol:water solution in order to obtain an hydroalcholic extract.

In first place, 2.66 g of the first polysaccharide, gum arabic, was dissolved in water in a ratio of 1:5 (w/w). Afterwards, 1.33 g of the oleoresin was gradually added to the aqueous solution while the mixtures was stirred using an IKA T25 Ultra-Turrax^{®} at 8000-10000 rpm. Gum arabic was added in a ratio 2:1 (w/w) with respect to the weight of the oleoresin obtained after the CO₂ supercritical extraction. Ethanol was removed in a rotary evaporator at 65 °C under vacuum (< 0.3 bar) to a concentration of less than 0.5 % ethanol (w/w).

Subsequently, 0.67 g of pea protein, as the protein, and 0.67 g of low-methoxyl pectin, as the second polysaccharide presenting an esterification degree of 27% to 33%, were added to the mixture while maintaining the stirring. The pH of the preparation was then adjusted to 3.8 with a 2N HCl solution while maintaining stirring. At this point, the complex coacervation microencapsulation took place. Finally, the sample was transferred to a spray-dryer to obtain a powdered extract.

### Example 3i. Preparation of a complex coacervate according to the invention

Once the extract (oleoresin) was obtained according to the procedure described from example 2i, complex coacervation is carried out.

In first place, 3.99 g of the first polysaccharide, gum arabic, was dissolved in water in a ratio of 1:5 (w/w). Afterwards, 1.33 g of the oleoresin was gradually added to the aqueous solution while the mixtures was stirred using an IKA T25 Ultra-Turrax^{®} at 8000-10000 rpm. Gum arabic was added in a ratio 3:1 (w/w) with respect to the weight of the oleoresin obtained after the CO₂ supercritical extraction.

Subsequently, 0.33 g of pea protein, as the protein, and 1.00 g of low-methoxyl pectin, as the second polysaccharide presenting an esterification degree of 27% to 33%, were added to the mixture while maintaining the stirring. The pH of the preparation was then adjusted to 4.0 with a 2N HCl solution while maintaining stirring. At this point, the complex coacervation microencapsulation took place. Finally, the sample was transferred to a spray-dryer to obtain a powdered extract.

### Example 4. Chromatographic characterization of the extracts and of the coacervates.

UPLC analysis of vanilloid compound in *Aframomum melegueta* samples, including 6-gingerol, 6-shogaol and 6-paradol, was performed on a Waters Acquity H-Class UPLC system coupled to a photodiode array detector (PDA). Separation was performed on an Acquity C₁₈ BEH column (Waters, 100 × 2.1 mm, 1.7 µm). The following chromatographic conditions were used: Methanol and water were used as mobile phases. The flow rate was set at 0.300 mL/min and the detection of the vanilloid compounds was made using a Photodiode Array Detector (PDA) at 280 nm. The injection volume was 1 µL and the column temperature was set at 40 °C.

To extract the vanilloid compounds, an appropriate weight of either *Aframomum melegueta* raw material (dried and ground seeds) or microencapsulated product (the botanical ingredient) was extracted in a volume of 80% methanol by sonication for 15 min at 37 kHz frequency and 100% power at room temperature. After sonication and cooling to room temperature, the volume was made up to final volume with the same solvent. The solution was then transferred to a 1.5 mL Eppendorf tube, centrifuged for 5 min at 14000 rpm and filtered through a 0.22 µm PTFE hydrophobic filter into a chromatographic vial using a 1 mL tuberculin syringe for analysis by UPLC.

6-gingerol, 6-shogaol and 6-paradol were identified by comparison of retention times and absorbance spectra with those of the standard reference compounds. Their concentrations were calculated by interpolating the area of the peak into the corresponding calibration curve. Results were also expressed as "vanilloid compounds" which represent the sum of the concentration of 6-gingerol, 6-shogaol and 6-paradol.

The results were expressed as the total concentration of the components in the sample analyzed (% w/w), considering the dilutions made, the initial sample weight and the purity of the standards. Figures 2a and 2b show representative chromatograms.

### Example 5. Characterization of the complex coacervate particles

Total vanilloids content both in the extract and in the microcapsules obtained by complex coacervation was determined according to the analytical method described in Example 4.

The microencapsulation efficiency (*MEE*%) was calculated by comparing the amount of total vanilloids present in the complex coacervate microcapsules (CTV), with the total amount of total vanilloids in the extract (ETV) initially used to produce the microcapsules. The MEE of microcapsules was calculated from the ratio 100 × CTV/ETV.

Morphological characterization of *Aframomum melegueta* particles was studied in a Field Emission Scanning Electron Microscope with Variable Pressure (FESEM) - Sigma 300 VP, Carl Zeiss. The powder particles were documented as manufactured. Briefly, the samples were attached to cylindrical aluminum stubs using double-sided carbon adhesive tape. FESEM secondary electron detector was used to image samples. Representative images of the topography of powder particles were taken at a very low kV (1), with different resolutions (50 µm to 2 µm). Digital images were taken with Zeiss SmartSEM v7.01 and ZEN CoreEM 3.2 (correlative pack). Figure 3 shows exemplary images.

Particle size distribution was determined by laser diffraction using a Mastersizer 3000+ (Malvern Instruments Ltd., Worcestershire, UK), also using water as dispersant (Figure 4). Circularity, elongation and area of the particles were measured by Morphologically Directed Raman Spectroscopy or MDRS^{®} using a Morphologi 4 system (Malvern Instruments Ltd., Worcestershire, UK), Figures 5-7. The zeta potential measurements were conducted with the Malvern Panalytical's Zetasizer Advance (Malvern Instruments Ltd., Worcestershire, UK) using water as dispersant at 25 °C, and using a polystyrene molecular weight standard sample, Figure 8.

### Example 6. Comparison between different complex coacervates and other microencapsulation techniques.

In this example, the microencapsulation efficiency (*%MEE*) of an extract of *Aframomum melegueta* encapsulated according to the process described in Example 3a, is compared with other coacervates.

**Table 1. Combinations of biopolymers and conditions used for the microencapsulation of an Aframomum melegueta extract by complex coacervation. ^{a} Spray-dried; ^{b} Freeze-dried (too viscous for spray-drying); ^{c} Ratio between the amount of Aframomum melegueta extract and the amount of wall material used for the encapsulation process.**

| Polyelectrolyte combination | Complex ratio (w/w) | Core-to-wall ratio (w/w) ^{c} | pH | MEE (%) |
|---|---|---|---|---|
| Gum arabic:gelatine ^{b} | 1:1 | 25/75 | 4.2 | 87.14 |
| Gum arabic:whey protein ^{a} | 2:1 | 25/75 | 4.0 | 17.82 |
| Gum arabic:pea protein ^{a} | 3:1 | 25/75 | 4.0 | 13.47 |
| Xanthan gum:whey protein ^{b} | 1:1 | 25/75 | 3.5 | 81.14 |
| Carrageenan:whey protein ^{a} | 2.5:1 | 25/75 | 6.5 | 31.94 |
| High methoxylated pectin:whey protein ^{a} | 1:2 | 25/75 | 4.1 | 63.12 |
| Low methoxylated pectin:whey protein ^{a} | 1:2 | 25/75 | 4.1 | 59.18 |
| Gum arabic:pea protein:high methoxylated pectin ^{a} | 2:1:1 | 25/75 | 4.0 | 83.3 |
| Gum arabic:pea protein: low methoxylated pectin ^{a} | 2:1:1 | 25/75 | 4.0 | 98.85 |

In addition, the efficiency of microencapsulation by spray-drying with that of other biopolymers in which complex coacervation processes do not take place was compared. (Table 2).

**Table 2. Combinations of biopolymers and conditions used for the microencapsulation of an Aframomum melegueta extract by spray-drying. ^{a} Ratio between the amount of Aframomum melegueta extract and the amount of wall material used for the encapsulation process.**

| Polyelectrolyte combination | Complex ratio (w/w) | Core-to-wall ratio (w/w) ^{a} | pH | MEE (%) |
|---|---|---|---|---|
| Gum arabic | 1 | 25/75 | NA | 36.25 |
| Gum arabic:maltodextrin:Lecithin | 50:12.5:2 | 35.5/64.5 | NA | 84.85 |
| Gum arabic:maltodextrin:Lecithin | 50:12.5:4 | 33.5/66.5 | NA | 70.89 |
| Gum arabic:cyclodextrin | 2:1 | 25/75 | NA | 87.01 |
| Gum arabic:maltodextrin | 2:1 | 25/75 | NA | 85.06 |
| Gum arabic:inulin | 3:1 | 25/75 | 4.2 | 36.45 |

### Example 7. Stability of coacervates of the invention and comparative ones.

In this example, the stability of an extract of *Aframomum melegueta* obtained according the Example 2d, and encapsulated with combination of gum arabic, pea protein and low methylated pectin according to the process described in Example 3a was evaluated. The microencapsulated powder was divided into equal portions of 25 g in double polyethylene bags. The bags were stored in the dark in climatic chambers under the following stability test conditions:
- Accelerated conditions: 40 °C ± 2 °C and 75 % relative humidity (RH) ± 5 % RH
- Long-term conditions: 25 °C ± 2 °C and 60 % relative humidity (RH) ± 5 % RH

**Table 3. Results obtained for the accelerated study.**

| Month | 0 | 1 | 2 | 3 |
|---|---|---|---|---|
| Total Vanilloid (as is %, w/w) | 11,79% | 11,58% | 11,66% | 11,74% |
| Diff. (%) | 0,0% | 1,8% | 1,1% | 0,4% |
| 6 paradol (as is %, w/w) | 3,06% | 3,03% | 3,17% | 3,09% |
| Diff. (%) | 0,0% | 1,0% | 3,6% | 1,0% |

**Table 4. Results obtained for the long-term study.**

| Month | 0 | 3 |
|---|---|---|
| Total Vanilloid (as is %, w/w) | 11,79% | 11,85% |
| Diff. (%) | 0,0% | 0,5% |
| 6 paradol (as is %, w/w) | 3,06% | 3,14% |
| Diff. (%) | 0,0% | 2,6% |

### Example 8. In vitro activity of an Aframomum melegueta extract.

A comparison was made between the effects of AME30 and AME70, on receptors/enzymes of the endocannabinoid system (eCBs) and the expanded endocannabinoid system (eCBome).

### Methodology

### Aframomum melegueta extract (AME).

***Aframomum melegueta* extract (AME).** Two *Aframomum melegueta* seeds extracts standardized to equal or more than 10% of vanilloid compounds (of which at least 20% of them are 6-paradol) were obtained after hydroethanolic extraction with 30:70 or 70:30 (v/v) ethanol-water mixture and coded as AME30 and AME70, respectively, as described in examples 2c and 2d. The extracts were encapsulated by the formation of the coacervates as described in example 3a.

**Binding and cellular and nuclear receptor functional assays.** To analyze if AME30 or AME70 have *in vitro* binding or inhibitory activities on endocannabinoid components, both AME30 or AME70 were screened by radioligand binding assay against human GABAA (Ion Channel Binding; Agonist Radioligand), GABAA (Ion Channel Flunitrazepam Binding; Agonist Radioligand), 5-HT1A (Serotonin Binding; Agonist radioligand), CB2 (Cannabinoid GPCR Binding; Agonist radioligand), Cannabinoid CB1 (Cannabinoid GPCR Binding; Antagonist radioligand) or Cellular Functional Assay against TPRV1 (Agonist & Antagonist Calcium Flux effect) or enzymatic inhibition test against Fatty Acid Amide Hydrolase enzyme (FAAH).

For the CB1R and FAAH assays, 120 µL of a 10 mM stock solution or 1 mg pre-weighed powder (MW/FW < 500, purity = 100%) prepared from AME30 or AME70 were used. For the rest of assays 190 µL of a 33.3 mM DMSO stock or 3.2 mg pre-weighed (MW/FW < 500) from both AME extracts were required.

### 1. In Vitro Pharmacology: Ligand Binding Assays.

AME dried ethanolic extracts were dissolved in DMSO and assayed at less than 0.2 % final DMSO concentration. DMSO itself at a concentration less than 0.5 % showed no significant effects on any of the ligand binding assay.

Briefly, single membranes solutions from Human recombinant Chem-1 cells containing either GABA A-BZD site (central) Receptor, CB2 Receptor, CB1 Receptor, GABAA1 Receptor or 5-HT1A Human receptor were prepared by hypotonic lysis in ice-cold lysis buffer with 10 strokes of a glass-on-glass Dounce, and collected by centrifugation for 20 min at 4 °C. Membranes were re-suspended in Tris buffer and incubated with specific (radio)ligands and AME extracts according to:
A) Aliquots of Solubilized membranes containing GABAA Receptors plus [3H]-Flunitrazepan with or without AME30 or AME70 at five concentrations (1×10⁻⁶ M, 1 ×10⁻⁵M, 2.5×10⁻⁵M, 5×10⁻⁵M, 1 ×10⁻⁴M) were incubated for 120 minutes at room temperature to determine total binding activity. Non-specific binding was determined by the addition of 10 µM diazepam. Specific binding was calculated by subtraction of non-specific binding from total binding activity.
B) Solubilized membranes containing CB2 Receptors plus [3H]WIN55212-2 with or without both AME extracts at five concentrations (1×10⁻⁶ M, 1×10⁻⁵ M, 2.5×10⁻⁵ M, 5×10⁻⁵ M, 1×10⁻⁴ M) were incubated for 120 minutes at room temperature. Non-specific binding was determined by the addition of 5 µM of WIN55212-2. Specific binding was calculated by subtraction of non-specific binding from total binding activity.
C) Solubilized membranes containing CB1 Receptor plus [3H]SR141716A with or without both AME extracts at five concentrations 1×10⁻⁶ M, 1×10⁻⁵ M, 2.5×10⁻⁵ M, 5×10⁻⁵ M, 1×10⁻⁴ M) were incubated for 120 minutes at room temperature. Non-specific binding was determined by the addition of 10 µM of CP-55,940. Specific binding was calculated by subtraction of non-specific binding from total binding activity.
D) Solubilized membranes containing GABAA1 receptor plus [3H]muscimol with or without both AME extracts at five concentrations (1×10⁻⁶ M, 1×10⁻⁵ M, 2.5×10⁻⁵ M, 5×10⁻⁵ M, 1×10⁻⁴ M) were incubated for 120 minutes at room temperature. Non-specific binding was determined by the addition of 10 µM of muscimol. Specific binding was calculated by subtraction of non-specific binding from total binding activity.
E) Solubilized membranes containing 5-HT1A receptor plus [3H]8-OH-DPAT with or without both AME extracts at five concentrations (1×10⁻⁶ M, 1×10⁻⁵ M, 2.5×10⁻⁵ M, 5×10⁻⁵ M, 1×10⁻⁴ M) were incubated for 60 minutes at room temperature to determine total Binding Activity. Non-specific binding was determined by the addition of 10 µM of 8-OH-DPAT. Specific binding was calculated by subtraction of non-specific binding from total binding activity.

### 2. Cellular and Functional Assay

### 2.1. Transient receptor potential cation channel subfamily member 1 (TRPV1R) assay

Chinese Hamster Ovary (CHO) cells with constitutive expression of recombinant Human TRPV1 receptor (TRPV1R) were seeded at a density of 40,000 cells per well into black-walled, clear-base 96-well poly-d-lysine-coated plates in 200 µL of DMEM media without doxycycline to allow for gene expression. The plates were incubated for 2 days at 37 °C and 5 % CO₂ to allow for maximum expression of TRPV1R. On the day of the experiment, the cells were incubated for 1 h at 37 °C in Hank's Balanced Salt Solution (HBSS) containing 10 mM HEPES pH 7.4, 1 % BSA and 2.5 mM probenecid, with the addition of the calcium indicator 4 µM Fluo-4 AM solubilized in 22 µL of DMSO and combined with an equal volume of a 20% pluronic acid solution The cells were washed three times in 200 µL of the above-mentioned Hank's buffer and allowed to incubate for an additional 30 min at 37 °C in 100 µL of prewarmed buffer prior to the assay. The plates were then placed into a FLIPR with a heated stage (37 °C) to monitor cell fluorescence before and after of: a) the addition of reference agonist (capsaicin) or AME extracts at 50, 25, 10 and 1 µM (agonism testing); or b) the co-administration of the reference antagonists (capsazepine) with capsaicin or with AME extracts at doses of 50, 25, 10 and 1 µM (antagonism testing). After addition of the agonist or AME extracts, change in fluorescence was monitored for a period of 5 min and maximal increase in fluorescent signal was noted. Antagonist were added to cells in a volume of 50 µL via the FLIPR and allowed to incubate for 6 min prior to the addition of reference agonist or AME extracts. To assess activation, responses were measured as the difference between the maximum and the minimum change in fluorescence activity upon agonist addition. Data are presented as the percentage of the maximal response for reference agonist. Antagonist assay design responses were normalized for comparison based on maximal signal generated (capsaicin, 30 nM) upon addition of the cells expressing TRPV1R.

### 2.2. Fatty-acid amide hydrolase enzyme (FAAH) inhibition bioassay.

Briefly, to test potential inhibitory activity of AME extracts against FAAH were performed by FAAH Human Enzymatic LeadHunter Assay. Briefly, human recombinant FAAH expressed in SF21 cells was used for testing. AME extracts (100 µM) and/or vehicle (1 % DMSO) and/or reference inhibitory compound (100 nM) are preincubated with 2.6 U/mL of enzyme for 15 minutes at 37 °C in Tris buffer pH 9.0. The reaction is initiated by addition of 20 µM AMC-arachidoyl amide for another 60 minutes incubation period at 37 °C. The fluorescent enzymatic product 7-amino-4-methyl coumarin was quantified using a plate spectrofluorimeter (Excitation: 340 nm, Emission: 460 nm).

### Measurements

Compound binding was calculated as a % inhibition of the binding of a reference ligand specific for each target. Cellular agonist effect in functional assay was calculated as a % of control response to a known reference functional agonist for each target and cellular antagonist effect was calculated as a % inhibition of control reference functional agonist response for each target.

Results showing an inhibition higher than 50 % are considered to represent significant effects of the test compounds. 50 % is the most common cut-off value for further investigation (determination of IC50). Results showing an inhibition between 25-50 % are indicative of weak to moderate effects. Results showing an inhibition lower than 25 % are not considered significant and mostly attributable to variability of the signal around the control level. Low to moderate negative values have no real meaning and are attributable to variability of the signal around the control level. High negative values (≥ 50 %) that are sometimes obtained with high concentrations of test compounds are generally attributed to non-specific effects of the test compounds in the assays.

### Preparation of Aframomum melegueta extracts (AME30 and AME70)

The average molecular weight of 6-paradol, 6-gingerol and 6-shogaol (the most abundant vanilloids in the extracts) was 283.06 g/mol.

Stock test solutions of both AME30 and AME70 extracts were prepared in 4 mL of DMSO. Both extracts were normalized at the same quantity of total vanilloid content. The samples at 10 mM contained 11.32 mg of total vanilloids and samples at 33 mM contained 37.3 mg of total vanilloids. The AME30 has a reduced content in total vanilloids (5.26%) compared to the AME70 total vanilloids (14.15%).

So, it was necessary to add around 3 times more extract from the AME30 compared to the AME70. Stock test solutions (AME1.30, AME2.70, AME3.30, AME4.70), with a final volume of 3 mL each, were selected for evaluation.

Both AME1.30 and AME2.70 at 33.3 mM were tested at 1×10⁻⁶ M, 1×10⁻⁵ M, 2.5×10⁻⁵ M, 5×10⁻⁵ M and 1×10⁻⁴ M for Radioligand binding and Functional assay.

To evaluate FAAH Enzyme inhibition and binding activity for CB1 Receptor, the stock solutions of AME3.30 and AME4.70 at 10mM were tested at 1×10⁻⁴ M.

### Results

Compound binding or functional activity was calculated as indicated in the section "Measurement" above. Results showing an inhibition or stimulation higher than 50 % are considered to represent significant activity of the test compounds on specific receptors. Such significant effects were observed here and are listed in the following tables 5 and 6.

**Table 5. Compound AME1.30**

| Assay | 1×10⁻⁴ M | 5×10⁻⁵ M | 2.5×10⁻⁵ M | 1×10⁻⁵ M |
|---|---|---|---|---|
| CB₂*(h)* agonist radioligand | 91.5 % | | | |
| 5-HT_{1A}*(h)* agonist radioligand | 61.6 % | | | |
| TRPV1 (VR1) *(h)* agonist effect | | 121.7 % | 113.5 % | 104.4 % |
| TRPV1 (VR1) *(h)* antagonist effect | | 106 % * | 106.3 % * | 106.1 % * |

| | | | | |
|---|---|---|---|---|
| * The test compound induces at least 25 % agonist or agonist-like effect at this concentration. Therefore, further addition of the reference agonist cannot produce a full response, which results in an apparent inhibition. | | | | |

**Table 6. Compound AME1.30**

| Assay | 1×10⁻⁴ M | 5×10⁻⁵ M | 2.5×10⁻⁵ M | 1×10⁻⁵ M |
|---|---|---|---|---|
| CB₂*(h)* agonist radioligand | 85.8 % | | | |
| 5-HT_{1A}*(h)* agonist radioligand | 62.3 % | | | |
| TRPV1 (VR1) *(h)* agonist effect | | 114.4 % | 97.1 % | 88 % |
| TRPV1 (VR1) *(h)* antagonist effect | | 106.5 % * | 106.2 % * | 105.8 % * |

| | | | | |
|---|---|---|---|---|
| * The test compound induces at least 25 % agonist or agonist-like effect at this concentration. Therefore, further addition of the reference agonist cannot produce a full response, which results in an apparent inhibition. | | | | |

### Reference compounds

In each experiment and if applicable, the respective reference compound was tested concurrently with AME1.30 and AME2.70 and the data were compared with historical values.

The reference compounds are:
Diazepam for BZC (central)(h)(agonist radioligand);
WIN55212/2 for CB2(h)(agonist radioligand);
Muscimol for GABAA1 (h)(alpha 1, beta2, gamma2)( agonist radioligand);
8-OH-DPAT for 5-HT1A(h) (agonist radioligand);
Capsaiin for TRPV1 (VR1)(h)( agonist effect); and
Capsazepin for TRPV1 (VR1)(h)( antagonist effect).

### 1. Binding and enzymatic assays

**Table 7. Percentage inhibition of control specific binding of the extracts at 1×10⁻⁴ M.**

| Assay | Extract | % inhibition of control specific binding |
|---|---|---|
| BZD (central)(h) | AME1.30 | 43.5 |
| agonist radioligand | AME2.70 | 23.2 |
| CB₂*(h)* | AME1.30 | 91.5 |
| agonist radioligand | AME2.70 | 85.8 |
| GABA_{A1} *(h)* (α1β2γ2) | AME1.30 | 10.0 |
| agonist radioligand | AME2.70 | -79.0 |
| 5-HT_{1A}*(h)* | AME1.30 | 61.6 |
| agonist radioligand | AME2.70 | 62.3 |
| CB₁*(h)* | AME3.30 | 73 |
| antagonist radioligand | AME4.70 | 56 |
| FAAH enzymatic | AME3.30 | 93 |
| | AME4.70 | 92 |

Table 7 shows the % inhibition of control specific binding for AME1.30 and AME2.70 at 33.3 mM and a test concentration of 1×10⁻⁴ M. In particular:
▪ GABAA1 (agonist radioligand): BZD-GABAA1 α1β2γ2: Both extracts have a low to moderate modulatory effect on the allosteric site of GABAA1 receptor. AME1.30 presented a bigger effect on GABAA1 BZD (43,5 %) compared to AME2.70 (23.2 %).
▪ GABAA1 α1β2γ2 (agonist radioligand): Both extracts did not show a significant modulatory effect on the orthosteric site of GABAA1 receptor.
▪ CB2R (agonist radioligand): Both extracts showed significant binding to CB2R. AME1.30 exerted a more potent binding activity on CB2R than AME2.70 (91.5 % vs 85.5 %).
▪ 5-HT1A receptor (agonist radioligand): Both extracts interacted with 5-HT1A. Binding results from both extracts (AME1.30 and AME2.70) revealed similar inhibition of control specific binding (61.6 % vs 62.3 %).
▪ CB1R (antagonist radioligand): Both extracts presented significant binding on CB1R. The AME3.30 exerted a more potent binding capacity on CB2R than AME4.70 (73 % vs 56 %).
▪ FAAH (Fatty Acid Amide Hyrolase): Both AME4.70 and AME3.30 showed very close inhibitory activity against FAAH enzyme (92 % vs 93 %).

### 2. Functional cell assays

The Potential Ion Channel Cell Based Agonist & Antagonist Calcium Flux Assay results are shown in table 8.

**Table 8. Percentage relative to control agonist response (Agonist mode) and percentage inhibition of control agonist response (capsaicin at 30 µM) for AME1.30 or AME2.70 at different concentrations.**

| Assay | Extract | Test concentration | % of control Agonist response |
|---|---|---|---|
| TRPV1 (VR1) *(h)* agonist effect | AME1.30 | 1×10⁻⁶ M | 49.9 |
| | AME1.30 | 1×10⁻⁵ M | 104.4 |
| | AME1.30 | 2.5×10⁻⁵ M | 113.5 |
| | AME1.30 | 5×10⁻⁵ M | 121.7 |
| | AME2.70 | 1×10⁻⁶ M | 39.9 |
| | AME2.70 | 1×10⁻⁵ M | 88.0 |
| | AME2.70 | 2.5×10⁻⁵ M | 97.1 |
| | AME2.70 | 5×10⁻⁵ M | 114.4 |
| TRPV1 (VR1) *(h)* antagonist effect | AME1.30 | 1×10⁻⁶ M | 7.7 * |
| | AME1.30 | 1×10⁻⁵ M | 106.1 * |
| | AME1.30 | 2.5×10⁻⁵ M | 106.3 * |
| | AME1.30 | 5×10⁻⁵ M | 106.0 * |
| | AME2.70 | 1×10⁻⁶ M | 37.3 * |
| | AME2.70 | 1×10⁻⁵ M | 105.8 * |
| | AME2.70 | 2.5×10⁻⁵ M | 106.2 * |
| | AME2.70 | 5×10⁻⁵ M | 106.5 * |

| | | | |
|---|---|---|---|
| * The test compound induces at least 25 % agonist or agonist-like effect at this concentration. Therefore, further addition of the reference agonist cannot produce a full response, which results in an apparent inhibition. | | | |

In particular:
▪ TRPV1 agonist: Both extracts showed agonist activity against TRPV1 channel. The AME1.30 had a greater agonist effect on TRPV1 (1 microMolar) compared to AME 2.70 (100 micromolar).
▪ TRPV1 antagonist: Both extracts did not present antagonist activity against TRPV1 channel. Results of the experiment revealed a "false positive" antagonist effect on TRPV1 channel.

### Conclusion

Both extracts according to the present invention, AME30 and AME70, modulate receptors present in CNS, which are related to calmness and anxiety reduction such as c (from 23.2 to 43.5%), and 5-HT1A (from 61.6 to 62.3). Both extracts demonstrate cannabinoid properties due to the modulation of antagonist CB1 receptor (CB1R) and agonist CB2 receptor (CB2R).

Furthermore, both compositions of the present invention, AME30 and AME70, inhibit both FAAH enzyme (92-93 %) and activate TRPV1 (100 %).

Although the 70 % extract shows less potency in the results, for GABAA1 BZD, CB1R or CB2R, these results could be corrected by dose adjustments.

### Example 9. In vivo activity of an Aframomum melegueta extract.

*Aframomum melegueta* extracts (AME) are well known for their thermogenic effect thanks to the main active ingredient, 6-paradol. Aframomum seeds have traditionally been used for their anti-inflammatory properties to treat dysentery, abdominal pain, constipation, rheumatism, inflammation, snakebites and hypertension.

Example 8 shows *in vitro* results as proof that two compositions of the present invention, AME30 and AME70, as described in example 3a, are capable of modulating receptors and/or enzymes of both the canonical endocannabinoid including CB1R, CB2R and FAAH and the "non-canonical" expanded endocannabinoid system including TPRV1, 5-HTA1, GABBA-R. Since the endocannabinoid system has emerged as a major neuromodulatory system and it is considered to have an important role in the regulation of emotional homeostasis, sleep-wake cycle and stress responsiveness, the effective dose of the extracts of the invention was evaluated on anxiety, stress, mood and sleep.

### Methodology

***Aframomum melegueta* extract (AME).** *Aframomum melegueta* seeds extracts standardized to equal or more than 10% of vanilloid compounds (of which at least 20% of them are 6-paradol) were obtained after hydroethanolic extraction with 70:30 (v/v) ethanol-water mixture and coded as AME70, as described in example 2d. The extracts were encapsulated by the formation of the coacervates described in example 3a.

**Study design.** The study was conducted using a double-blind, randomized, crossover, group comparison experimental design. A single group received four doses of the product: 0 mg (placebo), 50 mg, 100 mg and 150 mg over a three-day period. A seven-day washout period was observed between each intervention. The dose application was randomized under randomization codes and followed two different profiles: - Ramp up: 0 mg - 50 mg - 100 mg - 150 mg - Ramp down: 150 mg - 100 mg - 50 mg - 0 mg.

The study was submitted to Kinetic Performance's Research Ethics Committee and approved on 09/01/2023 (CPMP/ICH/135/95).

**Participants.** The group of participants was composed of 37 people (40-50 years old) who were experiencing a state of anxiety. These were randomly assigned to receive the treatment dose.

### Inclusion criteria

1. Age between 40 and 50 years.
2. Score above 18 points on the Hamilton Anxiety Scale (HAM-A).
3. Acceptance and signature of the informed consent for the study after having received adequate information.

### Exclusion criteria

1. Score above 20 points on the Hamilton Depression Scale (HDRS).
2. Receiving medical treatment for anxiety, stress or depression.
3. Drug and alcohol dependence.
4. Severe personality disorders that may interfere with participation in the study (psychosis, ideation, suicidal ideation). (psychosis, severe suicidal ideation, etc.).
5. In the case of women, the intention to become pregnant.
6. Epileptic disorders.
7. Liver disorders (cirrhosis, hepatitis, etc.).
8. Professional sportsmen or those involved in extreme physical activities.
9. Inability to complete the intervention period due to external factors.

### Withdrawal criteria

Participants would be withdrawn if they met any of the following withdrawal criteria at any time during the study:
1. Failure to meet any of the other inclusion criteria during the study.
2. Meet any of the exclusion criteria during the study.
3. Product-related toxicity.
4. Failure to obtain the mandatory variables.
5. Failure to meet the established deadlines.
6. Loss of follow-up.
7. Death

### Study measures

**Anthropometric variables:** Day 0 (start of treatment) and +2 (end of treatment). Measurement of body composition: Participants' age, height and weight was measured. In addition, body composition was assessed, including fat mass, fat mass percentage, muscle mass, muscle mass percentage and body mass index (BMI).
**Blood pressure:** Day 0 (start of treatment) and +2 (end of treatment). Participants' blood pressure was measured using an automatic blood pressure monitoring device.
**Biochemical analysis:** Day 0 (start of treatment) and +2 (end of treatment). Laboratory tests were performed to measure various biochemical parameters in blood samples from participants. These tests included a complete blood count to assess blood cell composition. Levels of sodium, chlorine, magnesium and zinc, which are relevant for metabolic functioning, were also measured. Relevant minerals for metabolic and cellular function. GGT, GPT, GOT and FA enzymes, which are indicators of liver function, will also be tested. C-reactive protein, a marker of systemic inflammation, was measured and pro-inflammatory cytokines IL-1, IL-6, IL-8 and TNF-α were assessed. Finally, basal serum cortisol, a hormone related to the stress response, was measured.
**Hamilton Anxiety Scale (HAM-A):** Day 0 (start of treatment) and +2 (end of treatment).
**Test Profile of Mood States (POMS):** Day 0 (start of treatment) and +2 (end of treatment).
**Pittsburgh Sleep Quality Index (PSQI):** Day 0 (start of treatment) and +2 (end of treatment).
**Leeds Sleep Evaluation Questionnaire (LSEQ):** Day 0 (start of treatment), +1 and +2 (end of treatment).
**Heart Rate Variability (HRV):** Day 0 (start of treatment), +1 and +2 (end of treatment). Heart rate variability shall be collected with POLAR H10+ heart rate bands during sleeping hours.
**Patient diary.** Day 0 (start of treatment), +1 and +2 (end of treatment). Participants were provided with a notebook in which they recorded daily relevant information about their activities, food intake, the presence of symptoms such as headache or digestive problems.
**Training program.** Throughout the intervention period, participants followed a standardized training programme, based on intensities, perception-based training programme, perceived exertion (RPE) or repetitions in reserve (RIR). The RPE is a tool used to monitor the perceptual response to training, established as a method for determining exertion during exercise, while the RIR are scales designed as a means to monitor the relative effort of athletes by estimating the relative exertion of athletes by estimating how many repetitions they can perform before reaching muscle failure.
**Schedule of visits.** The total duration of the study was 18 weeks from the start of recruitment to the last participant visit: - Recruitment period: 8 weeks - Treatment period: 10 weeks - Individual study period: 33 days. The visits of each patient in the study took place in the morning hours, complying with the time window of 7.00 am to 10.30 am. Participants were required to attend in a fasting state, avoiding stimulating substances (e.g. coffee).

Day 0. Start of treatment (Visit). During Day 0, participants underwent the procedures according to the pre-test assessments. These included:
1. Anamnesis.
2. Blood pressure.
3. Anthropometric variables.
4. Hamilton Anxiety Scale (HAM-A).
5. Test Profile of Mood States (POMS).
6. Pittsburgh Sleep Quality Index (PSQI).
7. Leeds Sleep Evaluation Questionnaire (LSEQ).
8. Blood extraction (biochemical variables).
9. Heart rate variability (during nocturnal sleep).
10. Patient diary.

Day +1. Intervention (No visit). During day +1, participants underwent the procedures remotely, according to the follow-up assessments. These included:
1. Leeds Sleep Evaluation Questionnaire (LSEQ).
2. Heart rate variability (during nocturnal sleep).
3. Patient diary.

Day +2. End of treatment (Visit). During day +2, participants underwent the procedures in accordance with the post-test evaluations. These included:
1. Anamnesis.
2. Blood pressure.
3. Anthropometric variables.
4. Hamilton Anxiety Scale (HAM-A).
5. Test Profile of Mood States (POMS).
6. Leeds Sleep Evaluation Questionnaire (LSEQ).
7. Blood collection (biochemical variables).
8. Heart rate variability (during nocturnal sleep).
9. Patient diary.

Day +3 to +9. Wash-out period (No visit). Participant rest. Custody of the heart rate strap or return on these days.

**Statistical analysis.** Statistical analysis was performed with R version 4.3.1 and its RStudio interface. The Shapiro-Wilk test was used to check the normality of the data for the descriptive statistics (mean ± sd) and the descriptive statistics (mean ± sd) and inferential analysis.

Statistical differences between the different measures (pre and post) were tested by applying a paired T-student, and for differences between doses (0, 50, 100, 150) a univariate repeated measures ANOVA was applied.

ANOVA was applied for differences between doses (0, 50, 100, 150). In addition, repeated measures ANCOVA was performed to control for confounding variables.

For both ANOVA and ANCOVA, Bonferroni post hoc tests were performed. To estimate possible correlations between variables, a mixed-effects linear regression model was used. The level of significance for all techniques was p < 0.05.

For those variables that did not follow a non-normal distribution, we applied the Wilcoxon non-parametric test for paired samples and the Friedman test for Friedman analysis for repeated measures with corresponding Conover's post hoc with p-values adjusted with the Bonferroni method.

We predicted a Cohen's d effect size of 0.8 for the treatment group. Assuming a power of 80%, a type 1 error rate (alpha) of 5% the total number of participants to find an effect was estimated at 30.

### Results

This randomized, double blind, crossover, 4-arms trial was conducted by Kinetic performance (EBT) (Alicante, Spain). A total of 45 potential participants were invited to participate in the study, 37 started the study and 30 of them completed the 3-day trial, distributed in terms of gender, with 17 participants identified as male and 13 identified as female (average age of 46.4 ± 2.7). Data was also collected in full, with no missing data from assessment instruments. Study population was homogeneous, with no statistically significant differences between the groups on demographic characteristics.

This was an active population who already engaged in physical activity as a means of de-stressing and managing anxiety derived from their daily routines. In order to maintain homogeneity in the study, we standardized an exercise programme to ensure that this did not become an influential variable in the results.

The average bodyweight of the population (n=30) was (72.5 ± 13.1) kg (mean BMI of 23.9 ± 3.13). The Pittsburg mean value was 8.23 ± 3.49. A 30% (9 out of 30) of the population was considered as bad sleeper based on Pittsburg test results. At the beginning of the study, subjects were randomized to receive the treatments in increasing doses from placebo (ramp-up) or in decreasing doses to placebo (ramp-down).

### Anxiety levels

The Hamilton Anxiety Scale (HAM-A) is a tool widely used in the field of psychiatry and clinical psychology to assess and measure the severity of anxiety symptoms in individuals.

This instrument has been of great use in both clinical research and clinical practice, allowing mental health professionals to obtain an objective assessment of the severity of anxiety symptoms in individuals, assessment of a patient's anxiety and to track the evolution of symptoms over time. The HAM-A is composed of a series of carefully designed items that address a wide range of anxiety symptoms and manifestations associated with anxiety. These items cover cognitive, emotional and physical aspects of anxiety, providing insight into the anxiety, providing a complete picture of the patient's experience. Some examples of symptoms assessed by the HAM-A include tension, apprehension, restlessness, worry, anxiety symptoms, and physical symptoms such as palpitations, tremors and sweating, as well as the presence of anxiety-related insomnia.

During the interview, the patient is asked a series of questions and the severity of the patient's anxiety symptoms is assessed on a scale of anxiety symptoms on a rating scale. Each item is rated according to intensity and frequency of the symptoms, using a scale that generally ranges from 0 (absent) to 4 (very severe). The scores for each item are summed to give a total score that reflects the severity of the individual's anxiety. The HAM-A has become an essential tool in the assessment and monitoring of anxiety disorders, such as generalized anxiety disorders, panic disorder and other anxiety-related disorders. It is also used in clinical research to measure the effectiveness of therapeutic interventions and change in anxiety symptoms over time.

The HAM-A test performed on pre and post treatment highlighted a significant reduction in the total score for all treatment groups (50 mg, 100 mg and 150 mg). At baseline, pre-treatment, no statistical significance was observed among the treatment group. Changes in HAM-A scores across the 4 treatment groups are detailed in table 9.

**Table 9: Hamilton Scale Results (n=30). The results are grouped into pre-treatment data (D1, D3, D5 and D7) and post-treatment data (D2, D4, D6 and D8). The groups being compared are: D1 vs D2 for 0 mg group, D3 vs D4 for 50 mg groups, D5 vs D6 for 100 mg groups and D7 vs D8 for 150 mg groups).**

| Descriptive | | | | | | |
|---|---|---|---|---|---|---|
| | Mean | | | SD | | |
| HAM D1 | | 19.4 | | | 1.72 | |
| HAM D2 | | 19.9 | | | 2.18 | |
| HAM D3 | | 19.5 | | | 2.05 | |
| HAM D4 | | 17.8 | | | 2.55 | |
| HAM D5 | | 19.4 | | | 2.60 | |
| HAM D6 | | 14.9 | | | 2.75 | |
| HAM D7 | | 17.9 | | | 2.28 | |
| HAM D8 | | 12.5 | | | 2.27 | |

| Paired T-test | | | | | | |
|---|---|---|---|---|---|---|
| | | statistic | | gl | | P |
| HAM D1 | HAM D2 | -1.82 | | 29.0 | | 0.079 |
| HAM D3 | HAM D4 | 4.72 | | 29.0 | | <.001 |
| HAM D5 | HAM D6 | 15.60 | | 29.0 | | < .001 |
| HAM D7 | HAM D8 | 18.37 | | 29.0 | | < .001 |

A dose-dependent improvement in the HAM-A scale is observed. The percentage of improvement (or percentage of reduction in HAM-A score) is defined as (final value - initial value) × 100/initial value (figure 9). A statistically significant 45.25% reduction in HAM-A was observed for the higher doses group (P< .05), a 23,51% reduction in the 100 mg group (p<.05) and 8,44% reduction in the 50 mg group (p<.05). After three days of administration of the intake of 100 mg, the anxious condition is lost (reduction in HAM-A score below the cut-off point). No difference between genders was observed.

In conclusion an increasing and significant dose-dependent effect is observed.

### Changes in Mood state

The Profile of Mood States (POMS) is a psychometric tool used to assess and measure a person's moods and emotions at a specific point in time. The POMS is based on the fact that mood states can be divided into multiple dimensions or emotional categories. By measuring these moods, POMS allows for a more complete picture of an individual's emotional health or how certain factors (such as stress, exercise or therapy) may affect their emotional well-being.

The POMS uses is an adaptation of Castañeda C. and Vergara H. (*Análisis del perfil de estados de ánimo (Poms) de los deportistas de la UDCA. Bogotá: Universidad de Ciencias Aplicadas y Ambientales,* 2020), this adapted POMS includes a series of items or statements that describe different mood states, such as *tension, fatigue, depression, and vigorousness,* among others. The individual rates his or her level of agreement with each statement on a rating scale, often rating scale, often ranging from 0 (not at all) to 4 (very much). This scale is self-reported by individuals and the scores for each mood state are then summed to obtain a profile that reflects the individual's emotional make-up at that specific moment. Total Mood Disturbance (TMD) is a measure used in psychological and medical research to assess an individual's overall mood and is calculated by adding the scores of the dimensions of mood, tension, depression, fatigue and subtracting vigorousness.

Changes in items scores of POMS across the 4 treatment groups and repeated measures ANOVA significance levels are detailed in table 10 and figure 10. For the TMD, the global score for the POMS, an improvement in general mood was observed for all dosage and this improvement is high in male group. Similar results were observed for the subdimensions tension, fatigue, depression and vigor, without differences between males and female for tension or vigor. This pattern suggests that the product may possess properties with beneficial potential in mitigating tension (that means stress), depression and fatigue maintain the energy (vigor) and improve mood. The values of the fatigue dimension show a non-normal distribution. To compensate for the non-normality, the percentages of change are shown taking into account the variance of change and the p-values after a Wilcoxon test are shown.

**Table 10: POMS Scale Results, for each dimension (tension, fatigue, depression and vigor) and for Total Mood Disturbance (TMD)**

| **Tension** | | | | |
|---|---|---|---|---|
| Dosage (mg) | Pre (SD) | Post (SD) | Difference (mean) | *p* |
| 0 | 8.57 (3.14) | 7.57 (3.24) | 1.00 | < 0.001 |
| 50 | 8.00 (3.14) | 7.53 (2.80) | 0.47 | < 0.05 |
| 100 | 7.50 (3.05) | 6.80 (2.66) | 0.70 | < 0.005 |
| 150 | 7.20 (3.13) | 6.07 (2.13) | 1.13 | < 0.005 |

| **Fatigue** | | | | |
|---|---|---|---|---|
| Dosage (mg) | Pre (SD) | Post (SD) | Difference (mean) | *p* |
| 0 | 1.90 (2.20) | 1.97 (1.25) | -0.07 | 0.20 |
| 50 | 2.13 (1.36) | 1.97 (1.35) | 0.16 | < 0.05 |
| 100 | 2.00 (1.34) | 1.70 (1.35) | 0.30 | < 0.05 |
| 150 | 2.03 (1.30) | 1.50 (1.20) | 0.53 | < 0.01 |

| **Depression** | | | | |
|---|---|---|---|---|
| Dosage (mg) | Pre (SD) | Post (SD) | Difference (mean) | *p* |
| 0 | 8.07 (3.77) | 8.17 (3.99) | -0.10 | 0.60 |
| 50 | 8.27 (3.84) | 7.07 (3.61) | 1.20 | < 0.01 |
| 100 | 7.73 (3.50) | 5.90 (2.89) | 1.83 | < 0.01 |
| 150 | 8.17 (3.47) | 5.33 (2.86) | 2.84 | < 0.01 |

| **Vigor** | | | | |
|---|---|---|---|---|
| Dosage (mg) | Pre (SD) | Post (SD) | Difference (mean) | *p* |
| 0 | 10.40 (1.81) | 10.43 (1.74) | -0.03 | 0.30 |
| 50 | 10.50 (1.76) | 10.50 (1.61) | 0.00 | 1 |
| 100 | 10.37 (1.81) | 11.07 (1.41) | -0.70 | < 0.01 |
| 150 | 10.37 (1.69) | 11.27 (1.17) | -0.90 | < 0.01 |

| **TMD** | | | | |
|---|---|---|---|---|
| Dosage (mg) | Pre (SD) | Post (SD) | Difference (mean) | *p* |
| 0 | 8.13 (5.22) | 7.27 (4.95) | 0.86 | < 0.01 |
| 50 | 7.90 (5.43) | 6.07 (5.24) | 1.83 | < 0.01 |
| 100 | 6.87 (4.42) | 3.33 (4.28) | 3.54 | < 0.01 |
| 150 | 7.03 (4.72) | 1.63 (3.81) | 5.40 | < 0.01 |

| | | | | |
|---|---|---|---|---|
| ANOVA analysis and post HOC test revealed that for the states of tension (stress), depression and vigor, no differences were observed between doses of 100 and 150 mg, but between doses of 50 and 100 mg, whereby 100 mg would be an optimal dose for stress management. | | | | |

### Influence of plant extract on qualitative parameters of nocturnal sleep

The Leeds Sleep Evaluation Questionnaire (LSEQ) is a commonly used tool to determine the effects of drugs on sleep. Scoring for each question is on a scale from 0 to 100 mm. The subscales are as follows: the ease of getting to sleep (GTS), the perceived quality of sleep (QOS), the easy of awakening from sleep (AFS) and the integrity of behaviour following wakefulness (BFW). For this study a modified scoring criteria was used, the scale (5-point; 0-4), with 0 implying the worst outcome and 4 indicating the best outcome was used.

A dose-dependent improvement through the different variables is observed (table 11) and an improvement of 6.4%, 15% and 19.6% between placebo and 50 mg, 100 mg and 150 mg dosage, respectively was observed. No significant differences are observed between the doses of 50 and 100 mg but the doses of 150 mg could be suitable for improving sleep quality. ANOVA analysis and post HOC test showed significant differences between placebo and doses of 100 mg (p<0.05) and 150 mg (p<0.01) and between 50 mg and 150 mg (p<0.01).

**Table 11: Changes in LSEQ scored before and after treatment**

| Dosage (mg) | Pre (SD) | Post (SD) | Difference (mean) | *P* |
|---|---|---|---|---|
| 0 | 2.20 (0.24) | 2.24 (0.23) | -0.04 | 0.3178 |
| 50 | 2.19 (0.25) | 2.34 (0.24) | -0.15 | < 0.01 |
| 100 | 2.17 (0.27) | 2.53 (0.30) | -0.36 | < 0.01 |
| 150 | 2.19 (0.31) | 2.63 (0.24) | -0.44 | < 0.01 |

Regarding the LSEQ scores, a dosage-dependent improvement in the "sleep latency" and "quality of sleep" were observed (p<0.05 and p<0.01). For "behavior following wakefulness", "quality of sleep" scores increases for the doses of 100 mg and 150 mg (<0.01). For "Awaking from sleep" dimension, there is a dosage-dependent improvement from placebo to high dosages (Table 12).

**Table 12. Changes in LSEQ dimension scored before and after treatment.**

| Dimensions | Dosage (mg) | Pre | | Post | | Diff Mean | P |
|---|---|---|---|---|---|---|---|
| | | Mean | SD Pre | Mean | SD Post | | |
| GTS | 0 | 1.73 | 0.52 | 1.70 | 0.60 | 0.03 | 0.77 |
| | 50 | 1.70 | 0.47 | 2.03 | 0.56 | -0.33 | 0.05 |
| | 100 | 1.73 | 0.58 | 2.23 | 0.63 | -0.50 | 0.01 |
| | 150 | 1.80 | 0.55 | 2.57 | 0.63 | -0.77 | 0.01 |
| QOS | 0 | 2.20 | 0.85 | 2.00 | 0.69 | 0.20 | 0.12 |
| | 50 | 2.17 | 0.65 | 2.50 | 0.57 | -0.33 | 0.01 |
| | 100 | 2.07 | 0.64 | 2.73 | 0.69 | -0.66 | 0.01 |
| | 150 | 2.10 | 0.55 | 2.73 | 0.52 | -0.63 | 0.01 |
| AFS | 0 | 1.97 | 0.49 | 2.02 | 0.48 | -0.23 | 0.05 |
| | 50 | 1.87 | 0.43 | 2.07 | 0.52 | -0.20 | 0.05 |
| | 100 | 1.80 | 0.41 | 2.40 | 0.62 | -0.60 | 0.01 |
| | 150 | 1.83 | 0.46 | 2.33 | 0.56 | -0.50 | 0.01 |
| BFW | 0 | 7.37 | 1.03 | 7.57 | 1.01 | -0.20 | 0.71 |
| | 50 | 7.40 | 1.07 | 7.47 | 1.01 | -0.07 | 0.63 |
| | 100 | 7.43 | 1.04 | 7.83 | 1.18 | -0.40 | 0.05 |
| | 150 | 7.73 | 1.22 | 8.13 | 0.82 | -0.70 | 0.01 |

| | | | | | | | |
|---|---|---|---|---|---|---|---|
| GTS (Sleep latency or getting sleep), QOS (Quality of Sleep), AFS (Awaking from sleep), BFW (Behavior following wakefulness). | | | | | | | |

Figure 11 shows the percentage LSEQ dimension score improvement for each dose before and after treatment. The percentage of improvement is dose-dependent for the dimensions and the percentage of change is higher in "sleep latency" and "quality of sleep".

When the percentage of improvement for each dose is analyzed with respect to placebo, it is observed that for the GTS dimension, the percentages of improvement for the doses of 50, 100 and 150 mg are 19.41%, 31%, 18% and 51.18% respectively. For the QOS dimension, the percentages of improvement for the doses of 50, 100 and 150 mg are 25%, 36.50% and 36.50% respectively. For the AFS dimension, the percentages of improvement for the doses of 50, 100 and 150 mg are of 2.48%, 18.81% and 15.35% respectively. And finally, for the BFW dimension, the percentages of improvement for the doses 100 and 150 mg are 3.43% and 7.40% respectively.

After ANOVA or Friedman analysis and post HOC test, the results show the differences between doses of 0 mg (placebo) and 50 mg in the QOS dimension (p<0.05), difference between doses of 0 mg and 100 mg in the GTS (p<0.05) and QOS (p<0.01) and difference between doses of 0 mg and 150mg in the QOS (p<0.01) dimension.

Significant differences were found between genders for 100 mg and 150 mg doses in AFW and BFW dimensions.

### Sensitivity of parameters of heart rate variability during night-time sleep and blood pressure

High heart rate variability (HRV) is generally considered positive and desirable in certain contexts. HRV refers to fluctuations over time between heartbeats and is a measure of heart rate variability. Heartbeats is a measure of the autonomic nervous system's ability to regulate heart rate. In general, a high HRV is associated with positive indicators of well-being, such as improved cardiovascular health and increased adaptability of the body to stress.

The LF/HF (Low Frequency/High Frequency) ratio is a measure used in heart rate variability analysis (HRV) that provides information about the activity of the autonomic nervous system and how the heart rate is modulated in response to different influences. The LF (Low Frequency) variable represents fluctuations in heart rate in the low frequency range. These fluctuations are mainly influenced by the activity of the sympathetic nervous system, which is activated in stressful situations or in response to emotional factors. The HF (High Frequency) variable represents fluctuations in heart rate in the high frequency range. These fluctuations are mainly influenced by the activity of the parasympathetic nervous system or the vagus nerve. The parasympathetic system tends to slow down the heart rate and promote relaxation. So, the LF/HF ratio is used as a measure of the relative relationship between sympathetic (LF) and parasympathetic (HF) nervous system activity, a lower LF/HF ratio is associated with a greater predominance of parasympathetic activity and may reflect a state of relaxation or rest. Blood pressure was assessed by means of systolic pressure, diastolic pressure and mean arterial pressure (MAP).

**Table 13. Changes in cardiovascular variables means before and after treatment.**

| Systolic | | | | |
|---|---|---|---|---|
| Dosage (mg) | Pre (SD) | Post (SD) | Difference (mean) | *P* |
| 0 | 116.50 (13.95) | 117.23 | -0.73 | 0.40 |
| 50 | 118.30 (14.15) | 122.67 | -4.37 | <0.01 |
| 100 | 120.87 (14.22) | 116.37 | 4.50 | <0.01 |
| 150 | 123.00 (10.97) | 119.87 | 3.13 | <0.01 |

| Diastolic | | | | |
|---|---|---|---|---|
| Dosage (mg) | Pre (SD) | Post (SD) | Difference (mean) | *P* |
| 0 | 75.33 (8.76) | 72.97 | 2.36 | <0.01 |
| 50 | 78.20 (9.11) | 79.07 | -0.87 | <0.03 |
| 100 | 83.27 (8.80) | 79.33 | 3.94 | <0.01 |
| 150 | 82.07 (8.11) | 60.60 | 1.27 | 0.20 |

| MAP | | | | |
|---|---|---|---|---|
| Dosage (mg) | Pre (SD) | Post (SD) | Difference (mean) | *P* |
| 0 | 89.06 (10.14) | 87.72 | 1.33 | <0.01 |
| 50 | 91.57 (10.32) | 93.60 | -2.03 | <0.01 |
| 100 | 95.80 (10.19) | 91.68 | 4.12 | <0.01 |
| 150 | 95.71 (8.66) | 93.82 | 1.89 | <0.05 |

| HVR R-R | | | | |
|---|---|---|---|---|
| Dosage (mg) | Pre (SD) | Post (SD) | Difference (mean) | *P* |
| 0 | 1037.80 (195.34) | 1076.80 (151.92) | -51.42 | 0.40 |
| 50 | 966.23 (144.94) | 1089.22 (252.46) | -113.09 | <0.05 |
| 100 | 962.37 (158.05) | 1079.32 (227.83) | -110.18 | <0.05 |
| 150 | 983.13 (199.14) | 1072.55 (167.68) | -93.67 | <0.05 |

| HVR LF/HF | | | | |
|---|---|---|---|---|
| Dosage (mg) | Pre (SD) | Post (SD) | Difference (mean) | *P* |
| 0 | 2.17 (3.09) | 1.96 (0.21) | 0.21 | 0.70 |
| 50 | 1.93 (1.44) | 1.66 (0.27) | 0.27 | 0.50 |
| 100 | 1.95 (0.94) | 1.45 (0.50) | 0.50 | 0.06 |
| 150 | 2.24 (2.96) | 1.49 (0.75) | 0.75 | 0.20 |

In systolic pressure (Table 13), differences were found between before and after each dose, where systolic pressure increased at the 0 mg and 50 mg doses, but decreased at the 100 mg and 150 mg doses. Diastolic pressure and MAP (Table 13) only increased at the 50 mg dose and decreased at 0, 100 and 150 mg. HVR R-R (Table 13) increased significantly at all doses; while HVR LF/HF (Table 13) was unchanged. Diastolic pressure showed significant differences between the 0 mg dose and all other doses; systolic pressure between 0 vs 50 mg and between 50 vs 100 mg; and MAP between the 0 mg dose and all other doses, and between 50 vs 100 mg. HVR R-R and HVR LF/HF showed no differences between doses. For systolic blood pressure there is a percentage increase in change from placebo of up to 5.3 % at 50 mg and 2.9 % at 150 mg; for diastolic blood pressure there is a 7.3 % increase at 150 mg, 5.3 % at 100 mg and 4.9 % at 50 mg; and for MAP there is a 4.5 % increase at 50 mg, 2.6 % at 100 mg and 4.8 % at 150 mg.

### Inflammatory factors and liver function markers at different doses

The inflammatory markers assessed were IL-1, IL-6, IL-8 and TNF-α. Among all of them, significant differences were only observed between before and after treatment at the 0, 50 and 100 mg doses for IL-8 and TNF-α, in which a small increase was observed (Table 14) for both IL-8 and TNF-α. Both IL-8 and TNF-α show differences among doses, but only at the level of the pre-treatment and not in the inter-post comparisons (data not shown). The inflammatory markers IL-8 and TNF-α tended to increase in percentage with the 50 and 100 mg doses, with IL-8 increasing to 11.6% at 50 mg and 19.2% at 100 mg (p<0.05), while TNF-α increased to 11% at 50 mg and 26% at 100 mg (p<0.05).

**Table 14. Changes inflammatory factors means before and after treatment.**

| IL-1 | | | | |
|---|---|---|---|---|
| Dosage (mg) | Pre (SD) | Post (SD) | Difference (mean) | *P* |
| 0 | 1.98 (3.94) | 1.84 (3.44) | 0.14 | 0.2414 |
| 50 | 1.94 (3.61) | 1.84 (3.39) | 0.10 | 0.1682 |
| 100 | 2.01 (3.63) | 1.81 (3.2) | 0.20 | 0.1711 |
| 150 | 2.38 (3.9) | 2.18 (3.86) | 0.20 | 0.2104 |

| IL-6 | | | | |
|---|---|---|---|---|
| Dosage (mg) | Pre (SD) | Post (SD) | Difference (mean) | *P* |
| 0 | 2.3 (0.66) | 2.08 (0.21) | 0.22 | 0.0758 |
| 50 | 2.36 (0.91) | 2.12 (0.49) | 0.24 | 0.1009 |
| 100 | 2.12 (0.46) | 2.11 (0.43) | 0.01 | 0.8334 |
| 150 | 2.19 (0.54) | 2.13 (0.58) | 0.06 | 0.1765 |

| IL-8 | | | | |
|---|---|---|---|---|
| Dosage (mg) | Pre (SD) | Post (SD) | Difference (mean) | *P* |
| 0 | 131.25 (59.41) | 150.1 (60.05) | -18.85 | < 0.01 |
| 50 | 133.56 (58.33) | 146.42 (66.28) | -12.86 | < 0.05 |
| 100 | 143.23 (56.49) | 156.45 (66.22) | -13.22 | < 0.05 |
| 150 | 138.59 (57.38) | 134.73 (56.8) | 3.86 | 0.4044 |

| TNF-α | | | | |
|---|---|---|---|---|
| Dosage (mg) | Pre (SD) | Post (SD) | Difference (mean) | *P* |
| 0 | 5.01 (1.46) | 5.79 (1.79) | -0.78 | < 0.01 |
| 50 | 5.15 (1.69) | 5.55 (1.90) | -0.40 | < 0.05 |
| 100 | 5.70 (2.04) | 6.29 (2.54) | -0.59 | < 0.05 |
| 150 | 5.38 (1.77) | 5.22 (1.68) | 0.16 | 0.4159 |

| | | | | |
|---|---|---|---|---|
| No significant changes in liver enzymes are observed, so liver health is not affected. (data not shown). | | | | |

### Participants' feelings after ingesting the extract

The experiences shared by participants suggest significant improvements in several key areas of emotional and physical wellbeing. Firstly, several participants highlight an increased ability to handle stressful and conflicting situations. 6 participants report greater peace of mind during the day with 100 mg dose while 8 participants report greater peace of mind during the day with 150 mg/day. The sense of calm and patience during challenging moments, such as family disputes or daily responsibilities, indicates a positive impact on emotional regulation and stress management. These testimonies reflect a perceived improvement in emotional resilience and adaptation to previously anxiety-generating situations.

In addition, the positive influence of the plant extract extends to the area of sleep, as evidenced by comments related to improved sleep quality from 50 mg dose (one participant) to 150 mg dose per day (4 participants). The ability to experience full nights of sleep, without frequent interruptions, suggests a beneficial effect on sleep quality, suggests a beneficial effect on the quality of night-time rest, which, in turn, may have positive implications for physical health.

The impact on anxiety status is another recurring theme in the testimonies. Several participants report a decrease in anxiety both in everyday situations and in work and home environments (figure 12). This perceived reduction in stress and worry suggests that the plant extract may have effective anxiolytic properties, providing relief to those who experience a significant burden of anxiety in their daily lives.

### Conclusion

The *in vivo* results clearly demonstrate that treatment, with the coacervate of the invention, comprising the extract of the invention, was well tolerated and was not accompanied by any of the adverse side effects. Most of the patients showed a substantial improvement in their anxiety symptoms both through the test evaluation (reduction from 8 to 35 %) and under their own perception (from 36 % to 66 %).

The composition of the invention is a good candidate for managing stress and mood. In a dose-dependent manner (50 mg, 100 mg and 150 mg), it also reduces stress and improves mood. Besides, at doses of 100 and 150 mg, an improvement in sleep, both in terms of falling asleep, quality of sleep and waking up feeling rested was demonstrated.

## Claims

1. A complex coacervate-based microcapsule comprising:
a. a plant extract comprising a bioactive ingredient, mixed with a first polysaccharide; and
b. a plant protein mixed with a second polysaccharide selected from a pectin;
wherein said pectin and protein at least partially cover the first polysaccharide, and
wherein the microcapsule has a size comprised between 1 and 200 µm.

2. The complex coacervate according to claim 1, wherein the first polysaccharide, the plant protein and the second polysaccharide form a matrix structure.

3. The complex coacervate according to anyone of claims 1 or 2, wherein the plant protein is pea protein and/or wherein the first polysaccharide is gum arabic.

4. The complex coacervate according to anyone of claims 1 to 3, wherein said plant extract comprising a bioactive ingredient is an extract of Aframomum, preferably *Aframomum melegueta.*

5. A method for the preparation of the complex coacervate of anyone of claims 1 to 4, comprising the steps of:
a. Providing a mixture of a plant extract comprising a bioactive ingredient and a first polysaccharide in a hydroalcoholic solvent;
b. Submitting the mixture to an evaporation step to at least partially evaporate the alcoholic solvent;
c. Adding a plant protein and a second polysaccharide selected from a pectin having a methylation degree not greater than 50% to the mixture of step (b);
d. Adjusting the pH of the mixture of step (c) to a range of 3.5-4.5; and
e. Drying the mixture of step (d).

6. An extract of *Aframomum melegueta,* comprising:
- from 4 to 20 wt% of 6-shogaol;
- from 20 to 55 wt% of 6-paradol; and
- from 25 to 70 wt% of 6-gingerol;
the wt% being expressed as dry weight, with respect to the sum of the dry weights of 6-shogaol, 6-paradol and 6-gingerol.

7. The extract according to claim 6, wherein the sum of the wt% values of 6-shogaol, 6-paradol and 6-gingerol is at least 20 wt%, preferably at least 30 wt%, of the total dry weight of the extract.

8. The extract according to anyone of claims 6 or 7, which is an ethanol water extract.

9. A method for obtaining an extract of *Aframomum melegueta,* comprising the steps of:
a. Providing seeds of *Aframomum melegueta;*
b. Subjecting the seeds to
- a hydroalcoholic solvent comprising from 20% to 90% ethanol, or
- CO₂ supercritical fluid extraction, or
- CO₂ supercritical fluid extraction with 5% to 40% ethanol;
c. Raising the temperature to between 30 °C and 90 °C; and
d. Separating the liquid, or supercritical fluid, fraction from the solid residue, said fraction containing the extract.

10. The method according to claim 9, wherein the hydroalcoholic solvent comprises an ethanol water mixture at a ratio of from 20:80 to 90:10, preferably 70:30 (v/v).

11. The method according to anyone of claims 9 or 10, wherein step (d) comprises separating the liquid fraction from the solid residue by centrifugation.

12. An extract of *Aframomum melegueta* obtainable according to the method of anyone of claims 9 to 11.

13. Non-therapeutic use of the complex coacervate of claim 4, for preventing and/or reducing stress, anxiety, mood disturbances, and/or sleep disorders.

14. Non-therapeutic use of the extract of *Aframomum melegueta* according to anyone of claims 6 to 8, for preventing and/or reducing stress, anxiety, mood disturbances, and/or sleep disorders.

15. A nutraceutical composition comprising a complex coacervate according to claim 4, or comprising an extract of *Aframomum melegueta* according to any one of claims 6 to 8.
